# EUROPEAN PATENT APPLICATION

(11) **EP 4 610 645 A1**
(43) Date of publication of application: **03.09.2025**
(21) Application number: 24160521.1
(22) Date of filing: 29.02.2024
(51) Int. Cl.: G01N 30/74, G01N 30/88

(54) **METHODS FOR PROCESSING AND/OR PURIFICATION OF A BIOLOGICAL PRODUCT INVOLVING MULTI-ANGLE LIGHT SCATTERING AS ANALYTICAL TOOL FOR PROCESS CONTROL**

(71) Applicant: Sartorius Stedim Biotech GmbH, 37079 Göttingen (DE)
(72) Inventor: Austerjost, Jonas, 37079 Goettingen (DE); Kruse, Thomas, 37079 Goettingen (DE); Quaas, Bastian, 37079 Goettingen (DE)
(74) Representative: Cohausz & Florack

(57) **Abstract**

The present invention concerns methods for processing and/or purification of a biological product involving multi-angle light scattering as analytical tool for process control. The methods of the invention apply multi-angle light scattering to detect the biological product, the presence of a bioburden or the functionality and/or integrity of a consumable employed in the method for processing and/or purification of the biological product. Further, the invention relates to systems for processing and/or purification of a biological product configured to perform the methods of the invention. Lastly, the invention concerns computer program products which can be used in the methods of the invention.

## Description

### FIELD OF THE INVENTION

The present invention concerns methods for processing and/or purification of a biological product involving multi-angle light scattering as analytical tool for process control. Further, the invention relates to systems for processing and/or purification of a biological product configured to perform the methods of the invention. Lastly, the invention concerns computer program products which can be used in the methods of the invention.

### BACKGROUND OF THE INVENTION

Biological products such as viruses, virus-like particles, vesicles, exosomes, antibodies or recombinant proteins become more and more important as biopharmaceuticals. During upstream production, biological products are usually produced by cell cultures of bacteria, yeast, plant or animal cells in bioreactors. To ensure high quality and safety of the manufactured biological products, downstream processing is performed. This typically includes the separation of the biological product from undesirable host cell fragments and host cell components such as DNA, RNA, proteins and lipids.

Downstream processing of biological products faces multiple challenges. This includes the detection of the biological product which is necessary to monitor and/or control the entire downstream process. Such detection has to be efficient, reliable and specific for the biological product. This is particularly challenging in continuous processes where the detection often needs to be performed in real-time and thus complicates measurement conditions.

In the context of chromatography as downstream processing technology, WO2010151214A1, for example, concerns a method for determining binding capacities of a chromatography column comprising detecting a feed signal representative of the composition of a feed material provided to the inlet of the column, detecting an effluent signal representative of the composition of the effluent from the column, and using the feed signal and the effluent signal to determine binding capacities of the column. Thus, WO2010151214A1 makes use of a deltasignal determined based on the feed signal and the effluent signal. According to WO2010151214A1, the feed signal and effluent signal can be detected with devices measuring UV absorbance, pH, conductivity, light scattering, fluorescence, IR or visible light. Preferably, WO2010151214A1 suggests the use of UV detectors.

UV detection methods as preferred by WO2010151214A1 are used in many other downstream processing technologies but are rather unspecific for the biological products. This means that such UV detection methods cannot properly distinguish between biological products and impurities originating from the upstream production process. Such impurities can be, for example, medium components and/or host cell components such as proteins, DNA, RNA and lipids. The low detection specificity based on UV absorption is due to the fact that any protein-containing components comprising UV absorbing amino acids such as phenylalanine, tryptophan, tyrosine, and/or histidine are detected. UV-based detection also typically leads to high background noise. Other spectroscopy-based methods involving UV-VIS light, IR light or Raman scattering have similar detection specificity and background noise problems.

While the analytical tools for process control based on UV absorbance, pH, conductivity, fluorescence, IR or visible light have been rather broadly applied during downstream processing, multi-angle light scattering (MALS) has been used in very limited analytical control contexts.

In this regard, "Patel, Bhumit A., et al., Multi-angle light scattering as a process analytical technology measuring real-time molecular weight for downstream process control, MAbs. Vol. 10. No. 7, Taylor & Francis, 2018" describes the use of MALS in hydrophobic interaction chromatography to detect and control aggregate levels of antibodies.

EP3719494A1 describes a method for establishing a digital model of a chromatography using data generated via in-line MALS comprising the steps of
a) introducing a sample comprising at least one molecule of interest into a chromatography column or other separation means;
b) loading, washing, eluting or stripping the chromatography column or other separation means;
c) providing at least one MALS detector and at least one concentration detector wherein the sample comprising the at least one molecule of interest passes both detectors as soon as it leaves the column or other separation means;
d) determining the average molecule radius of the at least one molecule of interest comprised in the sample passing through the in-line MALS scattering detector;
e) determining the concentration of the at least one molecule of interest comprised in the sample using the data generated by the at least one concentration detector;
f) determining the molecular mass of the at least one molecule of interest comprised in the sample using the data generated by the in-line MALS detector and concentration detector;
g) assuming a functional dependence;
h) establishing a digital model of the chromatography column or other separation means.

US20220120678A1 describes a computer-implemented method, a system, and a computer program product of purifying a sample solution via real-time MALS. In one aspect, the method, system, and computer program product include receiving from a MALS instrument baseline scattering intensity values of a pure buffer, receiving from the MALS instrument scattering intensity values of a sample solution, and characterizing at least one component of the sample solution, resulting in a time series of values of a dimension (D) of the at least one component and a time series of values of excess Rayleigh ratio (R0) of the at least one component, and determining that the values of the dimension (D) fall within a dimension value range and that the values of excess Rayleigh ratio (R0) fall within an excess Rayleigh ratio value range, and transmitting a collect sample solution command to collect the sample solution.

US20230022034A1 describes a computer-implemented method, a system, and a computer program product of controlling the purification of a macromolecule solution via real-time MALS.

EP0665433B1 describes a method for determining the precision of a molecular weight measurement using data collected from light scattering and concentration detectors comprising in particular the step of A) injecting a sample into a column or other separation means and B) providing light scattering detectors and a concentration detector through which the eluting sample passes.

Another challenge of downstream processing is to control and/or detect biological contamination which may occur already during upstream processing, but also during downstream processing itself. Such biological contamination or bioburden can, for example, be present in the form of bacteria, archaea, fungi, yeasts or viruses. Similar to the detection of the biological products, the bioburden detection has to be efficient, reliable and specific for the bioburden. In continuous processes, the detection is ideally performed real-time which further increases the requirements for a suitable bioburden detection.

A further challenge of downstream processing is that it typically requires the use of consumables such as membrane filters in the systems for processing and/or purification. Their integrity and thus functionality must be kept constant during the entire downstream process, which is at present hard to monitor during the downstream processing, if at all possible. In continuous processes, the control of consumable integrity and functionality is ideally performed real-time and thus complicates the control conditions.

In summary, there is a need to overcome the above-described challenges of downstream processing. Taking into account that current biomanufacturing is driven to pursue continuous processing to increase efficiency and flexibility, reduce costs, and improve consistency and quality of the biological product, there is a need to overcome the above-described challenges of downstream processing in particular for continuous processes.

### SUMMARY OF THE INVENTION

Against the afore-described background, it is an object of the invention to provide improved methods, systems and computer program products for processing and/or purification of a biological product, in particular in terms of monitoring the biological product, the presence of a bioburden contamination or the functionality and/or integrity of a consumable employed therein. Specifically, it is an object of the present invention to provide methods, systems and computer program products which allow an efficient, reliable and specific monitoring of the biological product, the presence of a bioburden contamination or the functionality and/or integrity of a consumable employed therein.

These objects are achieved by the method according to claim 1, the system according to claim 12 and the computer program according to claim 13.

The invention comprises a method for processing and/or purification of a biological product involving MALS as analytical tool for process control wherein
(I) the method is a chromatography separation method and comprises at least the following steps:
   a.I) loading a processing material comprising a biological product onto a chromatography column;
   b.I) analyzing the flowthrough of the chromatography column for breakthrough of the biological product by MALS; and
   c.I) controlling in dependence on the analysis of step b.I) the chromatography separation method; or
(II) the method comprises at least the following steps:
   a.II) loading a processing material comprising a biological product into a processing and/or purification system;
   b.II) analyzing the processing material comprising the biological product or a process stream used in the processing and/or purification system for the presence of a bioburden by MALS wherein the bioburden is different from the biological product;
   c.II) controlling in dependence on the analysis of step b.II) the method for processing and/or purification of the biological product; or
(III) the method comprises at least the following steps:
   a.III) loading a processing material comprising a biological product into a processing and/or purification system;
   b.III) detecting the presence of the biological product in a stream of interest used during processing and/or purification of the processing material comprising the biological product in the processing and/or purification system by MALS; and
   c.III) controlling in dependence on the detection of step b.III) the method for processing and/or purification of the biological product.

The inventors surprisingly found that MALS can be used in methods for processing and/or purification of a biological product to monitor efficiently, reliably and specifically the biological product, the bioburden contamination or the functionality and/or integrity of a consumable employed therein.

MALS is a technique that measures the intensity of scattered light at different scattering angles. The measured intensity is proportional to molecular weight/particle size and concentration of the analytes. Thus, MALS is particularly suitable to characterize analytes of a larger molecular weight or particle size.

The inventors found that the intrinsic detection preference of MALS for analytes of larger molecular weight or particle size makes this detection method particularly suitable as analytical tool for process control in a method for processing and/or purification of a biological product to allow efficient, reliable and specific monitoring of the biological product, the presence of a bioburden contamination or the functionality and/or integrity of a consumable employed in the method.

Alternative (I) is advantageous because it detects the biological product by MALS. While the biological product employed in alternative (I) of the method of the invention is particularly suitable for MALS detection, impurities, for example, from the upstream production process such as media-components or host cell components typically do not contribute significantly to the detected MALS signal because of their rather low molecular weight/particle size. Thus, alternative (I) of the method of the invention ensures an efficient, reliable and specific detection of the biological product. This is even the case in a continuous embodiment of the method of the invention according to alternative (I).

Alternative (II) is advantageous because it detects the bioburden which is different from the biological product by MALS. The bioburden different from the biological product can be present, for example, in the form of bacteria, archaea, fungi, yeasts or viruses and is thus particularly suitable for MALS detection. Impurities, for example, from the upstream production process such as media-components or host cell components typically do not contribute significantly to the detected MALS signal because of their rather low molecular weight/ particle size and for this reason do not contribute to a wrong bioburden assessment. Thus, alternative (II) of the method of the invention ensures an efficient, reliable and specific detection of the bioburden different from the biological product. This is even the case in a continuous embodiment of the method of the invention according to alternative (II).

Alternative (III) is advantageous because it detects the presence of biological product in a stream of interest based on MALS. While the biological product employed in alternative (III) of the method of the invention is particularly suitable for MALS detection, impurities, for example, from the upstream or downstream production process such as media-components, buffer components or host cell components typically do not contribute significantly to the detected MALS signal because of their rather low molecular weight/ particle size. Thus, alternative (III) ensures an efficient, reliable and specific detection of the biological product in a stream of interest which can be used in alternative (III) of the method of the invention as an indication for the integrity and/or functionality of a consumable employed in the method such as a membrane filter. This is even the case in a continuous embodiment of the method of the invention according to alternative (III).

The invention also comprises a system for processing and/or purification of a biological product from a processing material comprising at least one MALS unit wherein
A. the system for processing and/or purification of the biological product from the processing material comprises:
   A.1) at least one chromatography column;
   A.2) at least one MALS unit comprising means configured to perform the method of alternative (I); or
B. the system for processing and/or purification of the biological product from the processing material comprises:
   B.1) one or more processing and/or purification units; and
   B.2) at least one MALS unit comprising means configured to perform the method of alternative (II); or
C. the system for processing and/or purification of the biological product from the processing material comprises:
   C.1) one or more processing and/or purification units; and
   C.2) at least one MALS unit comprising means configured to perform the method of alternative (III).

The advantages described above in connection with the method of the invention apply similarly to the systems of the present invention.

Further, the invention comprises a computer program product comprising instructions which, when the program is executed by a computer, cause the computer to carry out
i. at least the following steps:
   i.1) obtaining from a MALS unit baseline information and sample information,
      wherein the baseline information and sample information are determined from a flowthrough of a chromatography column in a chromatography
      separation method for processing and/or purification of a biological product,
      wherein the baseline information represents the flowthrough before breakthrough of the biological product from the chromatography column, and wherein the sample information represents the flowthrough after breakthrough of the biological product from the chromatography column;
   i.2) determining whether a difference exists between the flowthrough represented by the baseline information and the flowthrough represented by the sample information; and
   i.3) if it is determined that the difference exists, transmitting a command to a modification unit wherein the command causes the modification unit to modify the chromatography separation method; or
ii. at least the following steps:
   ii.1) obtaining from a MALS unit baseline information and sample
      information,
      wherein the baseline information and sample information are determined from a stream of interest used by a processing and/or purification system in a method for processing and/or purification of a biological product, wherein the baseline information represents the stream of interest before contamination with a bioburden,
      and wherein the sample information represents the stream of interest after contamination with a bioburden;
   ii.2) determining whether a difference exists between the stream of interest represented by the baseline information and the stream of interest represented by the sample information; and
   ii.3) if it is determined that the difference exists, transmitting a command to a modification unit wherein the command causes the modification unit to modify the method for processing and/or purification of the biological product; or
iii. at least the following steps:
   iii.1) obtaining from a MALS unit baseline information and sample
      information,
      wherein the baseline information and sample information are determined from a stream of interest used by a processing and/or purification system in a method for processing and/or purification of a biological product, wherein the baseline information represents the stream of interest before the presence of the biological product,
      and wherein the sample information represents the stream of interest after the presence of the biological product;
   iii.2) determining whether a difference exists between the stream of interest represented by the baseline information and the stream of interest represented by the sample information; and
   iii.3) if it is determined that the difference exists, transmitting a command to a modification unit wherein the command causes the modification unit to modify the method for processing and/or purification of the biological product.

The advantages described above in connection with the method of the invention apply similarly to the computer program products.

### DETAILED DESCRIPTION OF ILLUSTRATIVE EMBODIMENTS

### General definitions

As used in the present disclosure and claims the singular forms "a", "an" and "the" include plural forms unless the context clearly dictates otherwise.

The term "comprising" encompasses "including" as well as "consisting". For example, a composition "comprising" X may consist exclusively of X or may include something additional, e.g., X + Y.

Any example(s) following the term "e.g." or "for example" is not meant to be exhaustive or limiting.

Unless otherwise defined herein, scientific and technical terms used in this application shall have the meanings that are commonly understood by those of ordinary skill in the art. In case of conflict, the present description, including definitions, will control.

Practice of the methods employs, unless otherwise indicated, conventional techniques in biochemistry, and chemistry.

Reference to "about" a value or parameter herein includes (and describes) embodiments that are directed to that value or parameter per se. For example, description referring to "about X" includes description of "X". Numeric ranges are inclusive of the numbers defining the range.

### MALS used to detect a biological product in a chromatography separation method

According to alternative (I) of the method of the invention for processing and/or purification of a biological product involving MALS as analytical tool for process control the method is a chromatography separation method and comprises at least the following steps:
a.I) loading a processing material comprising a biological product onto a chromatography column;
b.I) analyzing the flowthrough of the chromatography column for breakthrough of the biological product by MALS; and
c.I) controlling in dependence on the analysis of step b.I) the chromatography separation method.

Additional steps can be included in the method of alternative (I) before step a.I), after step c.I) and in between steps a.I), b.I), and c.I).

The term "chromatography separation method" as used herein for alternative (I) means any chromatography separation method which allows the separation of the processing material by different distribution of the processing material components between a stationary phase and a mobile phase. The chromatography separation method can, for example, be an ion exchange chromatography separation method, a hydrophobic interaction chromatography separation method, an affinity chromatography separation method or a mixed mode chromatography separation method.

The stationary phase can be any phase suitable for a chromatography separation method. The stationary phase can, for example, be a resin, a membrane adsorber or a monolithic material. A resin as stationary phase is typically present in form of resin beads. A membrane adsorber as stationary phase typically contains a membrane with pores. A monolithic material as stationary phase typically comprises a one-piece porous solid and thus a single-unit structure.

A stationary phase can be functionalized, for example, by chemical groups or biological moieties such as protein A to meet the requirements of the chromatography separation method.

In one embodiment, the chromatography separation method according to alternative (I) is a continuous chromatography separation method. In such a continuous chromatography separation method, a processing material is continuously subjected to a chromatography separation method and thus continuously separated. Continuous chromatography separation methods are advantageous if large quantities of processing material need to be processed. Further, continuous chromatography separation methods increase efficiency of the processing material separation, increase overall productivity, ensure optimal usage of the employed chromatography column(s), reduce costs such as by savings of buffer, as well as improve consistency and quality of the biological product. The MALS measurement according to the invention which analyzes the flowthrough of the chromatography column for breakthrough of the biological product is particularly suitable for continuous chromatography separation methods because MALS measurements can be performed real-time and thus ensure a reliable, efficient and specific continuous monitoring of the processing material separation.

Continuous chromatography methods can be, for example, simulated moving bed (SMB) chromatography, periodic counter-current (PCC) chromatography, sequential multi-column (SMC) chromatography, multi-column chromatography, or multi-column countercurrent solvent gradient purification (MCSGP).

In one embodiment, the continuous chromatography method is an SMB chromatography separation method. The SMB chromatography separation method comprises the use of multiple chromatography columns. The SMB chromatography separation method can in particular be a BioSMB chromatography separation method, a CaptureSMB chromatography separation method or a Step-SMB chromatography separation method. In these SMB chromatography separation methods, at least two columns are connected in series during the loading step so that the effluent of the loaded column is loaded onto the subsequent column. This allows for column loading close to the static binding capacity. At the same time one or more columns could perform the non-loading steps, for example, washing, eluting or cleaning. Such SMB chromatography separation methods result in more efficient chromatography media utilization, higher productivity and lower buffer consumption compared to single-column batch chromatography separation methods. Specifically, during the BioSMB chromatography separation method, the first column in the load zone is allowed to reach breakthrough and the breakthrough is captured on a second column. The binding capacity of the first column can thus be exploited well beyond its batch dynamic binding capacity. Typically, BioSMB chromatography methods can be operated close to the equilibrium or static binding capacity of the chromatography media, thus leading to a significant reduction in chromatographic media use. The CaptureSMB chromatography separation method is a twin column periodic countercurrent chromatography separation method. Also here, a second chromatography column is connected to the effluent outlet of a first chromatography column, allowing to continue loading beyond the first column breakthrough thereby fully saturating the capacity of the chromatography medium. Then the fully loaded first chromatography column is disconnected from the second column, washed, eluted, cleaned and reconditioned for further use, while in parallel, the second column is loaded with feed material. The first cleaned column is now placed behind the second column to again allow the capture of the breakthrough product. This cyclic process is then repeated multiple times until the entire feed material has been processed.

The processing material which is processed and/or purified according to alternative (I) comprises the biological product. The term "processing material" as used herein for alternative (I) means a composition comprising the biological product and is suitable for loading onto a chromatography column. The processing material can be the feed material provided from upstream processing or can be produced as intermediate material during the method of the invention.

The biological product according to alternative (I) is suitable for MALS detection. This means that the biological product has a molecular weight or a particle size sufficient to induce upon a certain concentration a MALS signal different from the MALS signal of the flowthrough measured before the breakthrough of the biological product.

In one embodiment, the biological product according to alternative (I) is a biological product suitable for MALS detection. The term "biological product" as used herein for alternative (I) refers to any biological product which is produced by a biological system during biomanufacturing. Biological systems can be, for example, cultured cells.

In one embodiment, the biological product according to alternative (I) is a biological particle suitable for MALS detection. The term "biological particle" as used herein for alternative (I) means any biological particle produced by a biological system during biomanufacturing. The biological system can be, for example, a host cell. Examples of biological particles suitable for MALS detection in the method of alternative (I) are viruses, virus-like particles, vesicles, and exosomes. Such particles can be particularly well detected by MALS due to their relatively large particulate form.

In the chromatography separation method according to alternative (I), a chromatography column is loaded in step a.I) with processing material comprising the biological product. Thus, the processing material is provided as inlet material to the inlet of a chromatography column. The term "chromatography column" as used herein for alternative (I) refers to any chromatography column containing a stationary phase allowing the mobile phase comprising the processing material to pass through it and to interact with or bind the biological product.

The "stationary phase" as used herein can be any phase suitable for a chromatography separation method including but not limited to a resin, a membrane adsorber and a monolithic material. The term "loading a chromatography column with a processing material comprising the biological product" means that the chromatography column is exposed to the processing material so that the processing material comprising the biological product can pass through the chromatography column's stationary phase.

The term "flowthrough" as used herein for alternative (I) refers to the effluent material exiting the chromatography column.

In the method of alternative (I), the flowthrough of the chromatography column is analyzed in step b.II) for breakthrough of the biological product by MALS. The term "analyzing for breakthrough of the biological product" as used herein for alternative (I) means detecting the presence of the biological product in the flowthrough of the chromatography column.

Before the breakthrough of the biological product, the flowthrough gives rise to a baseline MALS signal. The baseline MALS signal is thus representative for the flowthrough before the breakthrough of the biological product. The skilled person knows based on his or her common general knowledge how to define suitable baseline parameters in dependency of the used chromatography separation method. Related to the baseline MALS signal of the flowthrough, the sample MALS signal, i.e. the MALS signal after the breakthrough of the biological product can be determined. In one embodiment, the breakthrough of the biological product is present when the MALS signal of the flowthrough is different from the baseline MALS signal which is measured for the flowthrough before the breakthrough of the product. The skilled person knows based on his or her common general knowledge what a suitable difference from the baseline MALS signal is to determine the breakthrough of the biological product. This typically depends on the purpose of the chromatography separation method and on the employed experimental parameters. The MALS signal of the flowthrough can be different from the baseline MALS signal by exceeding it. Thus, the baseline MALS signal serves as threshold MALS signal. The MALS signal can also be different from the baseline MALS signal based on the biological profile determined for the MALS signal, for example, by utilizing Multivariate Data Analysis (MVDA) and machine learning to process the MALS signals. Thus, the baseline MALS signal is used as reference MALS signal. The baseline MALS signal can in particular be obtained by applying baseline correction methods such as advanced baseline correction, wavelet transform analysis, chemometric methods such as Multivariate Curve Resolution (MCR) and Independent Component Analysis (ICA), time series analysis (for example ARIMA), machine learning algorithms, Random Forests, and methods to enhance the signal-to-noise ratio, such as smoothing or Fourier Transformation.

In one embodiment of alternative (I), the MALS measurement involves the measurement of scattered light from at least 2, preferably from at least 3, more preferably from at least 5, even more preferably from at least 7, still more preferably from at least 10 and most preferably from at least 15 discrete angles. It is advantageous to detect scattered light from more angles to increase signal intensity and thus to be able to detect the biological product at even low concentration levels.

In one embodiment of alternative (I), the information acquired by the MALS measurement is further processed by a mathematical algorithm, preferably to enhance detection of a biological product attribute. In one embodiment of alternative (I), the information acquired by the MALS measurement is further processed by a mathematical algorithm to enhance detection of the biological product size. The mathematical algorithm can, for example, comprise an analysis by multivariate linear regression or by multivariate non-linear regression. The information processing has the advantage that by the MALS measurement not only the concentration of the biological product is determined, but also a biological product size distribution can be estimated. Thus, information on the profile of the biological product can be obtained. In that way, biological product integrity and homogeneity, for example, the integrity and homogeneity of virus particles, virus-like particles, vesicles and exosomes can be assessed simultaneously.

In one embodiment of alternative (I), the MALS measurement is performed on-line, in-line or at-line, preferably on-line or at-line. The terms "on-line", "in-line" or "at-line" are technical terms known by the skilled person. During "in-line" measurement the flowthrough of the chromatography column is directly subjected to a MALS measurement and flows directly through the MALS detector. The advantage of an "in-line" measurement is that it measures almost exactly what is taking place in the chromatography separation method. During "on-line" measurement samples are continuously taken from the flowthrough of the chromatography column and subjected to a MALS measurement in a built-in bypass. Such "on-line" MALS measurements are advantageous when the MALS device cannot withstand the tough conditions that are encountered directly in the chromatography separation method. During "at-line" measurement a sample is manually and/or automatically taken from the flowthrough of the chromatography column and subjected to a MALS measurement. "At-line" measurements ensure that there is enough time for the measurement process to take place. In addition, the measuring device can be unconditionally optimized for precision.

In one embodiment of alternative (I), the MALS measurement is performed real-time. This has the advantage that the processing and/or purification of the biological product is controlled very tightly so that any changes are detected in real-time.

In one embodiment of alternative (I), the MALS measurement is performed in an angle range of 7° to 168°, preferably in an angle range of 7° to 135°. In this angle range, detection of scattered light is particularly suitable to analyze the biological product.

In one embodiment, the method for processing and/or purification of a biological product according to alternative (I) is performed with only one MALS detector to analyze the flowthrough of the chromatography column in step b.I). This is advantageous because only one detector needs to be implemented in the system configured to perform the method of alternative (I) while it is still possible based on the information from this single MALS detector to efficiently and reliably control the processing and/or purification of the biological product.

In the method of alternative (I), the chromatography separation method is controlled in step c.I) in dependency on the analysis of step b.I). The term "controlling in dependence on the analysis of step b.I) the chromatography separation method" as used herein for alternative (I) means that at least one parameter is changed in the chromatography separation method in response to the MALS signal. The changed parameter can be any process parameter of the chromatography separation method to modify the processing and/or purification of the biological product.

In one embodiment of alternative (I) the controlling of step c.I) comprises or consists of switching a previously loaded chromatography column employed in the chromatography separation method at the point of time when the breakthrough of the biological product in the flowthrough is detected in step b.I). This has the advantage that upon reach of the binding capacity of the loaded chromatography column, loading of the next chromatography column can be initiated. Such an adapted column switching leads to an increased productivity, optimal chromatography media usage, buffer savings and the ability to respond to variations of the preceding upstream process. This adapted column switching is particularly advantageous in a continuous chromatography process.

In one embodiment, the previously loaded chromatography column is identical to or different from the chromatography column for which the breakthrough of the biological product is analyzed in step b.I). In one embodiment, the previously loaded chromatography column is the chromatography column for which the breakthrough of the biological product is detected in step b.I) or is a chromatography column positioned upstream of the chromatography column for which the breakthrough of the biological product is detected in step b.I). In SMB processes typically the chromatography column positioned upstream of the chromatography column for which the breakthrough of the biological product is detected in step b.I) is switched. In such an SMB process, the chromatography column for which the breakthrough of the biological product is detected is connected to the effluent outlet of an upstream chromatography column, allowing to continue loading beyond the upstream chromatography column's breakthrough thereby fully saturating the capacity of the chromatography medium. Then the fully loaded upstream chromatography column is disconnected from the chromatography column for which the breakthrough of the biological product is detected in step b.I), washed, eluted, cleaned and reconditioned for further use. The first cleaned column is now placed behind the second column to again allow the capture of the breakthrough product. In one embodiment, the previously loaded chromatography column is the column which is loaded with processing material comprising the product wherein the processing material comprising the product is feed material provided from upstream processing. In one embodiment, the previously loaded chromatography column is the column for which the breakthrough of the biological product is detected in step b.I).

The term "analyzing" can be used interchangeably with the term "detecting".

The term "switching of a chromatography column" as used herein for alternative (I) means that the processing material is loaded onto another chromatography column to continue the processing and/or purification of the biological product from the processing material.

In one embodiment of alternative (I) the controlling of step c.I) comprises or consists of
- switching a previously loaded chromatography column positioned upstream of the chromatography column for which the breakthrough of the biological product is detected in step b.I) at the point of time when the breakthrough of the biological product in the flowthrough is detected in step b.I), or
- switching the column for which the breakthrough of the biological product is detected in step b.I) to a different chromatography column at the point of time when the breakthrough of the biological product in the flowthrough is detected in step b.I).

The different chromatography column can be another chromatography column located downstream of the column for which the breakthrough of the biological product is detected in step b.I). Switching a previously loaded chromatography column positioned upstream of the chromatography column for which the breakthrough of the biological product is detected in step b.I) can be in particular the case when the chromatography separation method is an SMB chromatography separation method which is particularly advantageous to achieve a more efficient chromatography media utilization, higher productivity and lower buffer consumption compared to single-column batch chromatography separation methods.

The switching of the chromatography column can be initiated at the point of time when the MALS signal of the flowthrough is different from the baseline MALS signal representing the flowthrough analyzed in step b.I) before the breakthrough of the biological product. Thus, the switching of the chromatography column is performed in dependency of a difference to the baseline MALS signal.

In one embodiment of alternative (I), the controlling of step c.I) includes the calculation of the dynamic binding capacity of the chromatography column. The term "dynamic binding capacity of the chromatography column" is a technical term known by the skilled person and refers to the binding capacity of the employed chromatography column under the applied chromatography operating conditions. Calculating the dynamic binding capacity based on the measured MALS signal has the advantage that the chromatography separation method can be efficiently adapted in response to the present dynamic binding capacity of the employed chromatography column.

The invention also provides a system according to alternative (A) for processing and/or purification of a biological product from a processing material comprising:
A.1) at least one chromatography column;
A.2) at least one MALS unit comprising means configured to perform any embodiment related to the method of the invention according to alternative (I).

The system according to alternative (A) is thus suitable to perform the method of the invention according to alternative (I).

The term "MALS unit" as used herein for alternative (A) refers to a unit comprising at least a MALS detector. The MALS unit can comprise additional sub-units which are crucial to effect any embodiment of the method of the invention according to alternative (I).

The term "configured to perform any embodiment related to the method of the invention according to alternative (1)" means that the MALS unit can be configured to perform any embodiment of the method of the invention according to alternative (I).

The invention also comprises a computer program product according to alternative (i) comprising instructions which, when the program is executed by a computer, cause the computer to carry out at least the following steps:
i.1) obtaining from a MALS unit baseline information and sample information,
   wherein the baseline information and sample information are determined from a flowthrough of a chromatography column in a chromatography separation method for processing and/or purification of a biological product,
   wherein the baseline information represents the flowthrough before breakthrough of the biological product from the chromatography column, and wherein the sample information represents the flowthrough after breakthrough of the biological product from the chromatography column;
i.2) determining whether a difference exists between the flowthrough represented by the baseline information and the flowthrough represented by the sample information; and
i.3) if it is determined that the difference exists, transmitting a command to a modification unit wherein the command causes the modification unit to modify the chromatography separation method.

The computer program product according to alternative (i) is suitable for use in the method of the invention according to alternative (I). Thus, the computer program product according to alternative (i) can be used to modify a chromatography separation method as described for the method of the invention according to alternative (I).

Additional steps can be included in the computer program product according to alternative (i) before step i.1), after step i.2) and in between steps i.1), i.2), and i.3).

In step i.1), which is executed by the computer program product of alternative (i), baseline information and sample information are obtained from a MALS unit,
wherein the baseline information and sample information are determined from a flowthrough of a chromatography column in a chromatography separation method for processing and/or purification of a biological product,
wherein the baseline information represents a flowthrough before breakthrough of the biological product from the chromatography column,
and wherein the sample information represents a flowthrough after breakthrough of the biological product from the chromatography column. The term "baseline information representing a flowthrough before breakthrough of the biological product from the chromatography column" means in particular that this flowthrough is categorized by the skilled person based on the experimental parameters used in the chromatography separation method as a flowthrough without breakthrough of biological product but can in fact already contain traces of biological product.

The term "obtaining from a MALS unit" as used in step i.1) means that the baseline information and sample information can be directly obtained from a MALS unit or from one or more intermediate units wherein the one or more intermediate units communicate with the MALS unit. The term "obtaining from a MALS unit" in particular comprises "receiving from a MALS unit".

The baseline information and sample information are determined based on the flowthrough of a chromatography column in a chromatography separation method. For example, the baseline information and sample information are calculated on a respective parameter or numerical value that represents the respective flowthrough of a chromatography column based on the MALS measurement. In addition, the baseline information and sample information may be determined based on further information.

The information used by the computer program product according to alternative (i) can be any type of electronically encoded information.

The term "baseline information" as used herein for alternative (i) means any information, data, or parameter obtained from a MALS unit wherein the baseline information represents information, data, or parameter representing the flowthrough from a chromatography column before breakthrough of the biological product from the chromatography column. The baseline information can be determined or is at least partially based on the information received from the MALS unit. The baseline information can in particular be obtained by applying baseline correction methods such as advanced baseline correction, wavelet transform analysis, chemometric methods such as Multivariate Curve Resolution (MCR) and Independent Component Analysis (ICA), time series analysis (for example ARIMA), machine learning algorithms, Random Forests, and methods to enhance the signal-to-noise ratio, such as smoothing or Fourier Transformation.

The term "sample information" as used herein for alternative (i) means any information, data, or parameter obtained from a MALS unit wherein the sample information concerns information, data, or parameter representing the flowthrough from a chromatography column after breakthrough of the biological product from the chromatography column. The sample information can be determined or is at least partially based on the information received from the MALS unit.

The baseline information and sample information thus differ at least from each other in that the sample information may contain information on a biological product. In principle, the baseline information serves as reference for the sample information to determine whether the sample information indicates the presence of a biological product.

The baseline information and sample information are determined from the flowthrough of the same chromatography column.

In step i.2), which is executed by the computer program product of alternative (i), it is determined whether a difference exists between the flowthrough represented by the baseline information and the flowthrough represented by the sample information. The term "determining" includes any type of logical operation to assess whether there is a difference between the baseline information and the sample information, in particular a difference between the flowthrough represented by the baseline information and the flowthrough represented by the sample information. The skilled person knows based on his or her common general knowledge what a suitable difference between the baseline information and sample information is. This typically depends on the purpose of the chromatography separation method and on the employed experimental parameters.

In step i.3), which is executed by the computer program product of alternative (i), a command is transmitted to a modification unit wherein the command causes the modification unit to modify the chromatography separation method if a difference is determined between the baseline information and sample.

The command may be understood as electronic command comprising one or more digital instructions that instruct the modification unit to modify the chromatography separation method. For example, the command may comprise a sequence of binary code or machine-level instructions that direct hardware components of the modification unit to perform a specific task.

The modification unit can be any unit suitable or configured to modify the chromatography separation method.

The term "to modify a chromatography separation method" means that the chromatography separation method is modified in any parameter to alter the processing and/or purification of the biological product in the chromatography separation method. The chromatography separation method can be modified according to any embodiment described for chromatography separation method according to the invention, i.e. the method of alternative (I).

In one embodiment of alternative (i), the chromatography separation method is modified in step i.3) by switching a previously loaded chromatography column employed in the chromatography separation method. In that way, the computer program product ensures that upon reach of the binding capacity of the previously loaded chromatography column, loading of the next chromatography column is initiated. Such an adapted column switching mediated by the computer program product of alternative (i) leads to an improved control of the chromatography separation method because the chromatography separation method is run with an increased efficiency and flexibility, an increased overall productivity, an optimal chromatography medium usage of the employed chromatography column(s), reduced costs such as by savings of buffer, as well as improved consistency and quality of the biological product.

In one embodiment, the previously loaded chromatography column is identical to or different from the chromatography column whose flowthrough is used to obtain the baseline information and sample information by the MALS measurement. In one embodiment, the previously loaded chromatography column is the chromatography column whose flowthrough is used to obtain the baseline information and sample information or is a chromatography column positioned upstream of the chromatography column whose flowthrough is used to obtain the baseline information and sample information. In SMB processes, the chromatography column positioned upstream of the chromatography column whose flowthrough is used to obtain the baseline information and sample information is switched.

The term "determining the difference between the baseline information and sample information" as used herein for alternative (i) refers to any logical operation to determine a difference determined between the baseline information and sample information. The difference is thereby indicative for the presence of the biological product.

The term "difference between the baseline information and sample information" as used herein for alternative (i) refers to any difference between the baseline information and sample information. The sample information can be different from the baseline information by exceeding it. Thus, the baseline information serves as threshold information. The sample information can also be different from the baseline information based on the biological profile determined for the respective information, for example, by utilizing Multivariate Data Analysis (MVDA) and machine learning to process the information obtained from the MALS unit. Thus, the baseline information is used as reference information. The baseline information can in particular be obtained by applying baseline correction methods such as advanced baseline correction, wavelet transform analysis, chemometric methods such as Multivariate Curve Resolution (MCR) and Independent Component Analysis (ICA), time series analysis (for example ARIMA), machine learning algorithms, Random Forests, and methods to enhance the signal-to-noise ratio, such as smoothing or Fourier Transformation.

In one embodiment of alternative (i), the computer program product comprises program instructions which cause a processor to perform and/or control at least steps i.1), i.2) and i.3) when the computer program product runs on the processor. A processor is to be understood, for example, as control unit, microprocessor, microcontrol unit such as a microcontroller, digital signal processor (DSP), application-specific integrated circuit (ASIC) or field programmable gate array (FPGA). In this case, at least steps i.1), i.2) and i.3) can be controlled or at least steps i.1), i.2) and i.3) can be performed.

In one embodiment of alternative (i), the computer program is distributable. The distribution of the computer program can take place, for example, via a network such as the Internet, a telephone or mobile radio network and/or a local area network. The computer program can be at least partially software and/or firmware of a processor. The computer program product can be at least partially implemented as hardware.

In one embodiment of alternative (i), the computer program is stored on a storage medium. Such a storage medium can be a computer-readable storage medium such as a magnetic, electrical, optical storage medium and/or any other type of computer-readable storage medium. The storage medium can also be, for example, part of the processor such as a (non-volatile or volatile) program memory of the processor or a part thereof. The storage medium can also be a tangible or physical storage medium.

Apparatus comprising means for carrying out the following steps:
i.1) obtaining from a MALS unit baseline information and sample information,
   wherein the baseline information and sample information are determined from a flowthrough of a chromatography column in a chromatography separation method for processing and/or purification of a biological product,
   wherein the baseline information represents the flowthrough before breakthrough of the biological product from the chromatography column, and wherein the sample information represents the flowthrough after breakthrough of the biological product from the chromatography column;
i.2) determining whether a difference exists between the flowthrough represented by the baseline information and the flowthrough represented by the sample information; and
i.3) if it is determined that the difference exists, transmitting a command to a modification unit wherein the command causes the modification unit to modify the chromatography separation method.

### MALS used to detect a bioburden

According to alternative (II) of the method of the invention for processing and/or purification of a biological product involving MALS as analytical tool for process control the method comprises at least the following steps:
a.II) loading a processing material comprising a biological product into a processing and/or purification system; and
b.II) analyzing the processing material comprising the biological product or a process stream used in the processing and/or purification system for the presence of a bioburden by MALS wherein the bioburden is different from the biological product;
c.II) controlling in dependence on the analysis of step b.II) the method for processing and/or purification of the biological product.

Additional steps can be included in the method of alternative (II) before step a.II), after step c.II) and in between steps a.II), b.II), and c.II).

In the method of alternative (II), a processing material comprising a biological product is loaded in step a.II) into a processing and/or purification system.

The term "processing and/or purification system" as used herein for alternative (II) refers to any system suitable for processing and/or purifying a biological product produced by a biomanufacturing process. Thus, the term "processing and/or purification system" refers to any system suitable for downstream processing of a biological product produced by a biomanufacturing process. The skilled person knows which processing and/or purification system can be chosen for the method of alternative (II) by taking into account the physicochemical properties of the biological product and its desired purity. The processing and/or purification system can for example be a chromatography separation system, a tangential flow filtration system, an extraction system, a precipitation system or a dead-end-filtration system.

The processing material which is processed and/or purified according to alternative (II) comprises the biological product. The term "processing material" as used herein for alternative (II) means a composition comprising the biological product and is suitable for loading into the processing and/or purification system. The processing material can be the feed material provided from upstream processing or can be produced as intermediate material during the method of the invention.

In one embodiment, the biological product according to alternative (II) is a biological product. The term "biological product" as used herein for alternative (II) refers to any biological product which is produced by a biological system during biomanufacturing. Biological systems can be, for example, cultured cells. The biological product according to alternative (II) can be, for example, a virus, a virus-like particle, a vesicle, an exosome, an antibody or a recombinant protein.

In the method of alternative (II), the processing material comprising the biological product can be analyzed in step b.II) for the presence of a bioburden by MALS wherein the bioburden is different from the biological product. The analysis in step b.II) can comprise the analysis of any processing material comprising the biological product used in the method for processing and/or purification of the biological product by the processing and/or purification system. Thus, the term "analyzing the processing material comprising the biological product used in the processing and/or purification system for the presence of a bioburden by MALS " means analyzing any stream of interest comprising the biological product used in the method for processing and/or purification of the biological product by the processing and/or purification system.

Alternatively, in the method of alternative (II) a process stream can be analyzed in step b.II). The analysis in step b.II) can comprise the analysis of any process stream used in the method for processing and/or purification of the biological product by the processing and/or purification system. Thus, the term "analyzing the process stream used in the processing and/or purification system for the presence of a bioburden by MALS" means analyzing any stream of interest used in the in the method for processing and/or purification of the biological product by the processing and/or purification system.

In one embodiment, the process stream differs from the processing material comprising the biological product in the presence of the biological product. In one embodiment, the process stream is substantially free or devoid of the biological product. The process stream can for example be a buffer stream. "Substantially free of the biological product" means that the process stream contains less than 1 % w/v of biological product, preferably less than 0.1 % w/v of biological product. Alternatively, "substantially free of biological product" means that the process stream contains less than 5 %, preferably less than 1 % of biological product as compared to the feed material provided by the upstream processing.

The term "bioburden" as used herein for alternative (II) refers to any reproducing biological contaminant in the processing material which is different from the biological product. In one embodiment, the bioburden or reproducing biological contaminant is selected from the group consisting of archaea, prokaryotic cells such as bacteria, eukaroytic cells such as yeasts and viruses. In one embodiment, the bioburden or reproducing biological contaminant is selected from the group consisting of archaea, prokaryotic cells such as bacteria and eukaroytic cells such as yeasts.

The bioburden according to alternative (II) is suitable for MALS detection. This means that the bioburden has a particle size sufficient to induce upon a certain concentration a MALS signal different from the MALS signal of the processing material comprising the biological product or the process stream measured before the presence of a bioburden.

The biological product and the bioburden are different. This means that the biological product and the bioburden differ in at least one biological property. A biological property can be, for example, the size.

In one embodiment of alternative (II), the difference between the biological product and the bioburden is detectable by MALS. This can, for example, be the case if the biological product and the bioburden differ in their particle size.

In one embodiment, the biological product according to alternative (II) can be distinguished based on its MALS signal from the bioburden. Due to the differences in molecular size or particle size the MALS signal of the bioburden is in particular stronger than the MALS signal of the biological product. This is advantageous in the method of alternative (II) since the bioburden can then be distinguished particularly efficiently from the biological product.

In one embodiment of alternative (II), the MALS measurement involves the measurement of scattered light from at least 2, preferably from at least 3, more preferably from at least 5, even more preferably from at least 7, still more preferably from at least 10 and most preferably from at least 15 discrete angles. It is advantageous to detect scattered light from more angles to increase signal intensity and thus to be able to detect the bioburden at even low concentration levels.

In one embodiment of alternative (II), the information acquired by the MALS measurement is further processed by a mathematical algorithm, preferably to enhance detection of a bioburden attribute. In one embodiment of alternative (II), the information acquired by the MALS measurement is further processed by a mathematical algorithm to enhance detection of the bioburden size. The mathematical algorithm can, for example, comprise an analysis by multivariate linear regression or by multivariate non-linear regression. This information processing has the advantage that by the MALS measurement not only the concentration of the bioburden is determined, but also a bioburden size distribution can be estimated. In that way, the presence of different kinds of bioburdens can be detected.

In one embodiment of alternative (II), the MALS measurement is performed on-line, in-line or at-line, preferably on-line or at-line. The terms "on-line", "in-line" or "at-line" are technical terms known by the skilled person. During "in-line" measurement the processing material comprising the biological product or the process stream is directly subjected to a MALS measurement and flows directly through the MALS detector. The advantage of an "in-line" measurement is that it measures almost exactly what is taking place in the method for processing and/or purification of the biological product. During "on-line" measurement samples are continuously taken from the processing material comprising the biological product or the process stream and subjected to a MALS measurement in a built-in bypass. Such "on-line" MALS measurements are advantageous when the MALS device cannot withstand the tough conditions that are encountered directly in the method for processing and/or purification of the biological product. During "at-line" measurement a sample is manually and/or automatically taken from the processing material comprising the biological product or the process stream and subjected to a MALS measurement. "At-line" measurements ensure that there is enough time for the measurement process to take place. In addition, the measuring device can be unconditionally optimized for precision.

In one embodiment of alternative (II), the MALS measurement is performed real-time. This has the advantage that the presence of a bioburden is controlled very tightly so that the presence of any bioburden is detected in real-time.

In one embodiment of alternative (II), the MALS measurement is performed in an angle range of 7° to 168°, preferably in an angle range of 7° to 135°. In this angle range, detection of scattered light is particularly suitable to analyze the bioburden.

In the method of alternative (II), the method for processing and/or purification of the biological product in step c.II) is controlled in dependence on the analysis of step b.II). This has the advantage that the method for processing and/or purification of the biological product can directly be adjusted to remove and/or further treat the biological product contaminated with a bioburden.

The term "controlled in dependence on the analysis of step b.II)" as used herein for alternative (II) means that the method for processing and/or purification of the biological product is modified in at least one parameter when a bioburden is present. A bioburden is present when the MALS signal measured for the processing material comprising the biological product or the MALS signal measured for the process stream is different from the baseline MALS signal measured for the processing material or the process stream before contamination with the bioburden. The skilled person knows based on his or her common general knowledge how to define suitable baseline parameters in dependency of the used method for processing and/or purification of the biological product. The skilled person also knows based on his or her common general knowledge what a suitable difference from the baseline MALS signal is to determine the presence of a bioburden in the processing material comprising the biological product or the process stream. This typically depends on the purpose of the used method for processing and/or purification of the biological product and on the employed experimental parameters. The MALS signal of the processing material comprising the biological product or the process stream can be different from the baseline MALS signal by exceeding it. Thus, the baseline MALS signal serves as threshold MALS signal. The MALS signal can also be different from the baseline MALS signal based on the biological profile determined for the MALS signal, for example, by utilizing Multivariate Data Analysis (MVDA) and machine learning to process the MALS signals. Thus, the baseline MALS signal is used as reference MALS signal. The baseline MALS signal can in particular be obtained by applying baseline correction methods such as advanced baseline correction, wavelet transform analysis, chemometric methods such as Multivariate Curve Resolution (MCR) and Independent Component Analysis (ICA), time series analysis (for example ARIMA), machine learning algorithms, Random Forests, and methods to enhance the signal-to-noise ratio, such as smoothing or Fourier Transformation. The presence of a bioburden in the processing material comprising the biological product or the process stream can be confirmed by determining their colony-forming units. The skilled person knows based on his or her common general knowledge how to determine the colony-forming units of a material of interest.

In one embodiment of alternative (II), the controlling of step c.II) comprises or consists of triggering a signal and an additional action when a bioburden is present. In one embodiment of alternative (II), the controlling of step c.II) comprises or consists of triggering a signal and an additional action when the presence of a bioburden is detected. This is advantageous because it ensures that the bioburden is removed and the biological is further processed.

The term "signal" as used herein in connection with step c.II) refers to any signal indicating that a difference between the MALS signal measured for the processing material comprising the biological product or the MALS signal measured for the process stream is different from the baseline MALS signal measured for the processing material or the process stream before contamination with the bioburden.

In one embodiment of alternative (II), the additional action is selected from the group consisting of a wash step, a sanitization step, a temporal discard of the biological product, a replacement of a consumable employed in the processing and/or purification system and a combination thereof.

The term "wash step" as used herein for alternative (II) refers to any wash step which is suitable to decrease or remove the presence of a bioburden while the processing and/or purification of the biological product is not perturbed.

The term "sanitization step" as used herein for alternative (II) refers to any sanitization step which is suitable to kill or inactivate the bioburden while the processing and/or purification of the biological product is not perturbed. Such a sanitization can be effected by using suitable chemicals or physical methods such as ionizing radiation, UV light, membrane filtration and ultrasound.

The term "temporal discard of the biological product" as used herein for alternative (II) means that at least one stream of interested containing the biological product is discarded. In that way, the production of contaminated biological product is avoided until the source of the contamination is removed, for example, in the upstream production process. The discard of the biological product is preferred when other suitable actions for separating the biological product from the contaminant are not available.

The term "replacement of a consumable employed in the processing and/or purification system" as used herein for alternative (II) refers to the replacement of any equipment used in the processing and/or purification system affecting the processing and/or purification of the biological product. In one embodiment, the replaced consumable is a filter. In one embodiment, the replaced consumable is a membrane filter. The membrane filter can be any membrane filter with a size cut-off allowing flowthrough of the biological product but retaining the bioburden. The term "membrane filter" as used herein for alternative (II) refers to a porous membrane of a thickness of about 50 to 300 µm.

The invention also provides a system according to alternative (B) for processing and/or purification of the biological product from the processing material comprising:
B.1) one or more processing and/or purification units; and
B.2) at least one MALS unit comprising means configured to perform any embodiment related to the method of the invention according to alternative (II).

The system according to alternative (B) is thus suitable to perform the method of the invention according to alternative (II).

The term "processing and/or purification unit" as used herein for alternative (B) means any unit suitable for processing and/or purifying a biological product produced by a biomanufacturing process. Thus, the term "processing and/or purification unit" refers to any unit suitable for downstream processing of a biological product produced by a biomanufacturing process.

The term "MALS unit" as used herein for alternative (B) refers to a unit comprising at least a MALS detector. The MALS unit can comprise additional sub-units which are crucial to effect any embodiment of the method of the invention according to alternative (II).

The term "configured to perform any embodiment related to the method of the invention according to alternative (II)" means that the MALS unit can be configured to perform any embodiment of the method of the invention according to alternative (II).

The invention also comprises a computer program product according to alternative (ii) comprising instructions which, when the program is executed by a computer, cause the computer to carry out at least the following steps:
ii.1) obtaining from a MALS unit baseline information and sample information,
   wherein the baseline information and sample information are determined from a stream of interest used by a processing and/or purification system in a method for processing and/or purification of a biological product, wherein the baseline information represents the stream of interest before contamination with a bioburden,
   and wherein the sample information represents the stream of interest after contamination with a bioburden;
ii.2) determining whether a difference exists between the stream of interest represented by the baseline information and the stream of interest represented by the sample information; and
ii.3) if it is determined that the difference exists, transmitting a command to a modification unit wherein the command causes the modification unit to modify the method for processing and/or purification of the biological product.

The computer program product according to alternative (ii) is suitable for use in the method of the invention according to alternative (II). Thus, the computer program product according to alternative (ii) can be used to modify a method for processing and/or purification of a biological product as described for the method of the invention according to alternative (II).

Additional steps can be included in the computer program product according to alternative (ii) before step ii.1), after step ii.2) and in between steps ii.1), ii.2), and ii.3).

In step ii.1), which is executed by the computer program product of alternative (ii), baseline information and sample information are obtained from a MALS unit, wherein the baseline information and the sample information are determined from a stream of interest used by a processing and/or purification system in a method for processing and/or purification of a biological product, wherein the baseline information represents the stream of interest before contamination with a bioburden, and wherein the sample information represents the stream of interest after contamination with a bioburden. The term "baseline information representing a stream of interest before contamination with a bioburden" means in particular that the stream of interest is categorized by the skilled person based on the experimental parameters used in the method for processing and/or purification of the biological product as stream of interest before contamination with a bioburden but can in fact already contain traces of a bioburden.

The stream of interest can in particular be processing material comprising the biological product. Such processing material can be the feed material provided from upstream processing or can be produced as intermediate material during the method of the invention. The stream of interest can also be process stream. In one embodiment, the process stream differs from the processing material comprising the biological product in the presence of the biological product. In one embodiment, the process stream is substantially free or devoid of the biological product. The process stream can for example be a buffer stream. "Substantially free of the biological product" means that the process stream contains less than 1 % w/v of biological product, preferably less than 0.1 % w/v of biological product. Alternatively, "substantially free of biological product" means that the process stream contains less than 5 %, preferably less than 1 % of biological product as compared to the feed material provided by the upstream processing.

The term "obtaining from a MALS unit" as used in step ii.1) means that the baseline information and sample information can be directly obtained from a MALS unit or from one or more intermediate units wherein the one or more intermediate units communicate with the MALS unit. The term "obtaining from a MALS unit" in particular comprises "receiving from a MALS unit".

The baseline information and sample information are determined based on the stream of interest used in the method for processing and/or purification of a biological product. The method for processing and/or purification of a biological product can be any embodiment of the method for processing and/or purification of a biological product according to the invention, i.e. the method of alternative (II).

The information used by the computer program product according to alternative (ii) can be any type of electronically encoded information.

The term "baseline information" as used herein for alternative (ii) means any information, data, or parameter obtained from a MALS unit wherein the baseline information represents information, data, or parameter for a stream of interest before contamination with a bioburden. The baseline information can be determined or is at least partially based on the information received from the MALS unit. The baseline information can in particular be obtained by applying baseline correction methods such as advanced baseline correction, wavelet transform analysis, chemometric methods such as Multivariate Curve Resolution (MCR) and Independent Component Analysis (ICA), time series analysis (for example ARIMA), machine learning algorithms, Random Forests, and methods to enhance the signal-to-noise ratio, such as smoothing or Fourier Transformation.

The term "sample information" as used herein for alternative (ii) means any information, data, or parameter obtained from a MALS unit wherein the sample information represents information, data, or parameter from a stream of interest after contamination with a bioburden. The sample information can be determined or is at least partially based on the information received from the MALS unit.

The baseline information and sample information thus differ at least from each other in that the sample information contains information on a bioburden. In principle, the baseline information serves as reference for the sample information to determine whether the sample information indicates the presence of a bioburden. The term "sample information indicating the presence of a bioburden" as used herein for alternative (ii) thus means that the sample information indicates the presence of a bioburden based on the baseline information as a reference.

In step ii.2), which is executed by the computer program product of alternative (ii), a difference between the baseline information and sample information is determined. The term "determining" includes any type of logical operation to assess whether there is a difference between the baseline information and the sample information. The skilled person knows based on his or her common general knowledge what a suitable difference between the baseline information and sample information is. This typically depends on the purpose of the method for processing and/or purification of the biological product and on the employed experimental parameters.

In step ii.3), which is executed by the computer program product of alternative (ii), a command is transmitted to a modification unit wherein the command causes the modification unit to modify the method for processing and/or purification of the biological product if a difference is determined between the baseline information and sample.

The command may be understood as electronic command comprising one or more digital instructions that instruct the modification unit to modify the method for processing and/or purification of the biological product. For example, the command may comprise a sequence of binary code or machine-level instructions that direct hardware components of the modification unit to perform a specific task.

The modification unit can be any unit suitable or configured to the method for processing and/or purification of the biological product.

The term "to modify a processing and/or purification method" means that the processing and/or purification method is modified in any parameter relevant to obtain a biological product that meets the requirements for a safe biological product without a relevant bioburden contamination. The processing and/or purification method can be modified according to any embodiment described for the processing and/or purification method according to the invention, i.e. the method of alternative (I).

The term "difference between the baseline information and sample information" as used herein for alternative (iii) refers to any difference between the baseline information and sample information. The skilled person knows based on his or her common general knowledge what a suitable difference from the baseline MALS signal is to determine the presence of the bioburden. This typically depends on the purpose of the method for processing and/or purification of the biological product and on the employed experimental parameters. The sample information can be different from the baseline information by exceeding it. Thus, the baseline information serves as threshold information. The sample information can also be different from the baseline information based on the biological profile determined for the respective information, for example, by utilizing Multivariate Data Analysis (MVDA) and machine learning to process the information obtained from the MALS unit. Thus, the baseline information is used as reference information. The baseline information can in particular be obtained by applying baseline correction methods such as advanced baseline correction, wavelet transform analysis, chemometric methods such as Multivariate Curve Resolution (MCR) and Independent Component Analysis (ICA), time series analysis (for example ARIMA), machine learning algorithms, Random Forests, and methods to enhance the signal-to-noise ratio, such as smoothing or Fourier Transformation.

In one embodiment according to alternative ii), the processing and/or purification method is modified in step ii.3) by triggering a signal and an additional action, wherein optionally the further action is selected from the group consisting of a wash step, a sanitization step, a temporal discard of the biological product and a combination thereof. In that way, the computer program product ensures that presence of a bioburden is tightly controlled, decreased and/or completely removed. Such an adaptation of the processing and/or purification method by the computer program product of alternative (ii) leads to an improved bioburden control and removal in the processing and/or purification method.

In one embodiment of alternative (ii), the computer program product comprises program instructions which cause a processor to perform and/or control at least steps ii.1), ii.2) and ii.3) when the computer program product runs on the processor. A processor is to be understood, for example, as control unit, microprocessor, microcontrol unit such as a microcontroller, digital signal processor (DSP), application-specific integrated circuit (ASIC) or field programmable gate array (FPGA). In this case, at least steps ii.1), ii.2) and ii.3) can be controlled or at least steps ii.1), ii.2) and ii.3) can be performed.

In one embodiment of alternative (ii), the computer program is distributable. The distribution of the computer program can take place, for example, via a network such as the Internet, a telephone or mobile radio network and/or a local area network. The computer program can be at least partially software and/or firmware of a processor. The computer program product can be at least partially implemented as hardware.

In one embodiment of alternative (ii), the computer program is stored on a storage medium. Such a storage medium can be a computer-readable storage medium such as a magnetic, electrical, optical storage medium and/or any other type of computer-readable storage medium. The storage medium can also be, for example, part of the processor such as a (non-volatile or volatile) program memory of the processor or a part thereof. The storage medium can also be a tangible or physical storage medium.

Apparatus comprising means for carrying out the following steps:
ii.1) obtaining from a MALS unit baseline information and sample information,
   wherein the baseline information and sample information are determined from a stream of interest used by a processing and/or purification system in a method for processing and/or purification of a biological product, wherein the baseline information represents the stream of interest before contamination with a bioburden,
   and wherein the sample information represents the stream of interest after contamination with a bioburden;
ii.2) determining whether a difference exists between the stream of interest represented by the baseline information and the stream of interest represented by the sample information; and
ii.3) if it is determined that the difference exists, transmitting a command to a modification unit wherein the command causes the modification unit to modify the method for processing and/or purification of the biological product.

### MALS used to detect a biological product in a stream of interest

According to alternative (III) of the method of the invention for processing and/or purification of a biological product involving MALS as analytical tool for process control the method comprises at least the following steps:
a.III) loading a processing material comprising a biological product into a processing and/or purification system;
b.III) detecting the presence of the biological product in a stream of interest used during processing and/or purification of the processing material comprising the biological product in the processing and/or purification system by MALS; and
c.III) controlling in dependence on the detection of step b.III) the method for processing and/or purification of the biological product.

Additional steps can be included in the method of alternative (III) before step a.III), after step c.III) and in between steps a.III), b.III), and c.III).

In the method of alternative (III), a processing material comprising a biological product is loaded in step a.III) into a processing and/or purification system.

The term "processing and/or purification system" as used herein for alternative (III) refers to any system suitable for processing and/or purifying a biological product produced by a biomanufacturing process. Thus, the term "processing and/or purification system" refers to any system suitable for downstream processing of a biological product produced by a biomanufacturing process. The skilled person knows which processing and/or purification system can be chosen for the method of alternative (III) by taking into account the physicochemical properties of the biological product and its desired purity. The processing and/or purification system can for example be a chromatography separation system, a tangential flow filtration system, an extraction system, a precipitation system or a dead-end-filtration system.

In one embodiment, the processing and/or purification system is a tangential flow filtration (TFF) system. TFF systems are advantageous for the processing and/or purification of processing material containing biological products because such biological products can otherwise quickly block the filter surface of dead-end-filters.

The processing material which is processed and/or purified according to alternative (III) comprises the biological product. The term "processing material" as used herein for alternative (III) means a composition comprising the biological product and is suitable for loading into the processing and/or purification system. The processing material can be the feed material provided from upstream processing or can be produced as intermediate material during the method of the invention.

The biological product according to alternative (III) is suitable for MALS detection. This means that the biological product has a molecular weight or a particle size sufficient to induce upon a certain concentration a MALS signal different from the MALS signal of the stream of interest measured before the presence of the biological product.

In one embodiment, the biological product according to alternative (III) is a biological product suitable for MALS detection. The term "biological product" as used herein for alternative (III) refers to any biological product which is produced by a biological system during biomanufacturing. Biological systems can be, for example, cultured cells.

In one embodiment, the biological product according to alternative (III) is a biological particle suitable for MALS detection. The term "biological particle" as used herein for alternative (III) means any biological particle produced by a biological system during biomanufacturing. The biological system can be a host cell. Examples of biological particles suitable for MALS detection in the method of alternative (III) are viruses, virus-like particles, vesicles, and exosomes. Such biological particles can be particularly well detected by MALS due to their relatively large particulate form.

In the method of alternative (III), the presence of the biological product is detected in step b.III) by MALS in a stream of interest used during processing and/or purification of the processing material comprising the biological product in the processing and/or purification system. Thus, the stream of interest can be any stream that is used or generated during the method of alternative (III) in the processing and/or purification system. A stream of interest can in particular also be a waste stream.

In one embodiment of alternative (III), the MALS measurement involves the measurement of scattered light from at least 2, preferably from at least 3, more preferably from at least 5, even more preferably from at least 7, still more preferably from at least 10 and most preferably from at least 15 discrete angles. It is advantageous to detect scattered light from more angles to increase signal intensity and thus to be able to detect the biological product at even low concentration levels.

In one embodiment of alternative (III), the information acquired by the MALS measurement is further processed by a mathematical algorithm, preferably to enhance detection of a biological product attribute. In one embodiment of alternative (III), the information acquired by the MALS measurement is further processed by a mathematical algorithm to enhance detection of the biological product size. The mathematical algorithm can, for example, comprise an analysis by multivariate linear regression or by multivariate non-linear regression. This information processing has the advantage that by the MALS measurement not only the concentration of the biological product is determined, but also a biological product size distribution can be estimated. In that way, biological product integrity and homogeneity, for example, the integrity and homogeneity of virus particles, virus-like particles, vesicles and exosomes can be assessed simultaneously.

In one embodiment of alternative (III), the MALS measurement is performed on-line, in-line or at-line, preferably on-line or at-line. The terms "on-line", "in-line" or "at-line" are technical terms known by the skilled person. During "in-line" measurement a stream of interest used in the processing and/or purification system is directly subjected to a MALS measurement and flows directly through the MALS detector. The advantage of an "in-line" measurement is that it measures almost exactly what is taking place in the method for processing and/or purification of the biological product from the processing material. During "on-line" measurement samples are continuously taken from the stream of interest used in the processing and/or purification system and subjected to a MALS measurement in a built-in bypass. Such "on-line" MALS measurements are advantageous when the MALS device cannot withstand the tough conditions that are encountered directly in the method for processing and/or purification of the biological product. During "at-line" measurement a sample is manually and/or automatically taken from the stream of interest used in the processing and/or purification system and subjected to a MALS measurement. "At-line" measurements ensure that there is enough time for the measurement process to take place. In addition, the measuring device can be unconditionally optimized for precision.

In one embodiment of alternative (III), the MALS measurement is performed real-time. This has the advantage that the presence of a biological product in a stream of interest is controlled very tightly so that the presence of any biological product in a stream of interest is detected in real-time.

In one embodiment of alternative (III), the MALS measurement is performed in an angle range of 7° to 168°, preferably in an angle range of 7° to 135°. In this angle range, detection of scattered light is particularly suitable to analyze the biological product.

In one embodiment of alternative (III), step c.III) comprises or consists of replacing one or more consumables in the processing and/or purification system in dependence on the detection of step b.III).

In the method of alternative (III), the method for processing and/or purification of the biological product is controlled in step c.III) in dependency on the detection in step b.III). The term "controlled in dependence on the detection of step b.III)" as used herein for alternative (III) means that at least one parameter is changed in the method for processing and/or purification of the biological product in response to the MALS measurement.

In one embodiment, the controlling of step c.III) comprises or consists of replacing one or more consumable in the processing and/or purification system when the presence of the biological product in the stream of interest is detected. In one embodiment, at least one parameter is changed in the method for processing and/or purification of the biological product if the MALS signal in the stream of interest is different from the baseline MALS signal. In one embodiment, the controlling of step c.III) comprises or consists of replacing one or more consumable in the processing and/or purification system if the MALS signal in the stream of interest is different from the baseline MALS signal. The skilled person knows based on his or her common general knowledge what a suitable difference from the baseline MALS signal is to determine the presence of the biological product. This typically depends on the purpose of the method for processing and/or purification of the biological product and on the employed experimental parameters.

The baseline MALS signal represents a stream of interest before the presence of the biological product. The skilled person knows based on his or her common general knowledge how to define suitable baseline parameters in dependency of the used settings for the method for processing and/or purification of the biological product. The MALS signal of the stream of interest comprising the biological product can be different from the baseline MALS signal by exceeding it. Thus, the baseline MALS signal serves as threshold MALS signal. The MALS signal can also be different from the baseline MALS signal based on the biological profile determined for the respective MALS signals, for example, by utilizing Multivariate Data Analysis (MVDA) and machine learning to process the MALS signals. Thus, the baseline MALS signal is used as reference MALS signal. The baseline MALS signal can in particular be obtained by applying baseline correction methods such as advanced baseline correction, wavelet transform analysis, chemometric methods such as Multivariate Curve Resolution (MCR) and Independent Component Analysis (ICA), time series analysis (for example ARIMA), machine learning algorithms, Random Forests, and methods to enhance the signal-to-noise ratio, such as smoothing or Fourier Transformation.

The term "consumable" as used herein for alternative (III) means any equipment used in the processing and/or purification system affecting the processing and/or purification of the biological product. In one embodiment, the consumable is a filter. In one embodiment, the consumable is a membrane filter. The term "membrane filter" as used herein for alternative (III) refers to a porous membrane of a thickness of about 50 to 300 µm.

In one embodiment of alternative (III), the method for processing and/or purification of the biological product is a tangential flow filtration method, the stream of interest is a permeate and the consumable is a membrane used as filter for obtaining the permeate. During tangential flow filtration, the permeate should remain free of biological product if the membrane used as filter is intact. During the filtration process the membrane can become damaged so that biological product can escape into the permeate. In the method of alternative (III) the presence of biological product in the permeate is used as an indicator of the membrane integrity. This has the advantage that proper tangential flow filtration is ensured over the whole filtration process, in particular in continuous processing, because once biological product is detected in the permeate and exceeds a defined threshold, the membrane is replaced.

The invention also provides a system according to alternative (C) for processing and/or purification of the biological product from the processing material comprising:
C.1) one or more processing and/or purification units; and
C.2) at least one MALS unit comprising means configured to perform any embodiment related to the method of the invention according to alternative (III).

The system according to alternative (C) is thus suitable to perform the method of the invention according to alternative (III).

The term "processing and/or purification unit" as used herein for alternative (C) means any unit suitable for processing and/or purifying a biological product produced by a biomanufacturing process. Thus, the term "processing and/or purification unit" refers to any unit suitable for downstream processing of a biological product produced by a biomanufacturing process.

The term "MALS unit" as used herein for alternative (C) refers to a unit comprising at least a MALS detector. The MALS unit can comprise additional sub-units which are crucial to effect any embodiment of the method of the invention according to alternative (III).

The term "configured to perform any embodiment related to the method of the invention according to alternative (III)" means that the MALS unit can be configured to perform any embodiment of the method of the invention according to alternative (III).

The invention also comprises a computer program product according to alternative (iii) comprising instructions which, when the program is executed by a computer, cause the computer to carry out at least the following steps:
iii.1) obtaining from a MALS unit baseline information and sample information,
   wherein the baseline information and sample information are determined from a stream of interest used by a processing and/or purification system in a method for processing and/or purification of a biological product, wherein the baseline information represents the stream of interest before the presence of the biological product,
   and wherein the sample information represents the stream of interest after the presence of the biological product;
iii.2) determining whether a difference exists between the stream of interest represented by the baseline information and the stream of interest represented by the sample information; and
iii.3) if it is determined that the difference exists, transmitting a command to a modification unit wherein the command causes the modification unit to modify the method for processing and/or purification of the biological product.

The computer program product according to alternative (iii) is suitable for use in the method of the invention according to alternative (III). Thus, the computer program product according to alternative (iii) can be used to modify a method for processing and/or purification of a biological product as described for the method of the invention according to alternative (III).

Additional steps can be included in the computer program product according to alternative (iii) before step iii.1), after step iii.2) and in between steps iii.1), iii.2), and iii.3).

In step iii.1), which is executed by the computer program product of alternative (iii), baseline information and sample information are obtained from a MALS unit, wherein the baseline information and sample information are determined based on a stream of interest used by a processing and/or purification system in a method for processing and/or purification of a biological product, wherein the baseline information represents the stream of interest before the presence of the biological product, and wherein the sample information represents a stream of interest after the presence of the biological product. The term "baseline information representing a stream of interest before the presence of the biological product" means in particular that the stream of interest is categorized by the skilled person based on the experimental parameters used in the method for processing and/or purification of the product as stream of interest before the presence of the biological product but can in fact already contain traces of biological product.

The term "obtaining from a MALS unit" as used in step iii.1) means that the baseline information and sample information can be directly obtained from a MALS unit or from one or more intermediate units wherein the one or more intermediate units communicate with the MALS unit. The term "obtaining from a MALS unit" in particular comprises "receiving from a MALS unit".

The baseline information and sample information are determined from a stream of interest used by a processing and/or purification system in a method for processing and/or purification of the biological product. The method for processing and/or purification of the biological product can be any embodiment of the method for processing and/or purification of the biological product according to the invention, i.e. the method of alternative (III).

The information used by the computer program product according to alternative (iii) can be any type of electronically encoded information.

The term "baseline information" as used herein for alternative (iii) means any information, data, or parameter received from a MALS unit wherein the baseline information represents information, data, or parameter from a stream of interest before the presence of the biological product. The skilled person knows based on his or her common general knowledge how to define suitable baseline parameters in dependency of the used method for processing and/or purification of the biological product. The baseline information can be determined or is at least partially based on the information received from the MALS unit. The baseline information can in particular be obtained by applying baseline correction methods such as advanced baseline correction, wavelet transform analysis, chemometric methods such as Multivariate Curve Resolution (MCR) and Independent Component Analysis (ICA), time series analysis (for example ARIMA), machine learning algorithms, Random Forests, and methods to enhance the signal-to-noise ratio, such as smoothing or Fourier Transformation.

The term "sample information" as used herein for alternative (iii) means any information, data, or parameter received from a MALS unit wherein the sample information represents information, data, or parameter from a stream of interest after the presence of the biological product. The sample information can be determined or is at least partially based on the information received from the MALS unit.

The baseline information and sample information thus differ at least from each other in that the sample information may contain information on a biological product. In principle, the baseline information serves as reference for the sample information to determine whether the sample information indicates the presence of a biological product.

In step iii.2), which is executed by the computer program biological product of alternative (iii), a difference between the baseline information and sample information is determined. The term "determining" includes any type of logical operation to assess whether there is a difference between the baseline information and the sample information. The skilled person knows based on his or her common general knowledge what a suitable difference from the baseline MALS signal is to determine the presence of the biological product. This typically depends on the purpose of the method for processing and/or purification of the biological product and on the employed experimental parameters.

In step iii.3), which is executed by the computer program product of alternative (iii), a command is transmitted to a modification unit wherein the command causes the modification unit to modify the method for processing and/or purification of the biological product.

The command may be understood as electronic command comprising one or more digital instructions that instruct the modification unit to modify the method for processing and/or purification of the biological product. For example, the command may comprise a sequence of binary code or machine-level instructions that direct hardware components of the modification unit to perform a specific task.

In one embodiment, a command is transmitted to a modification unit wherein the command causes the modification unit to modify the method for processing and/or purification of the biological product by replacing one or more consumables employed in the processing and/or purification system if a difference is determined between the baseline information and sample information. This has the advantage that a damaged or non-functional consumable is replaced to ensure that the method for processing and/or purification of the biological product is run effectively.

The modification unit can be any unit suitable or configured to modify the method for processing and/or purification of the biological product.

The consumable replaced in step iii.3) can be any embodiment described for the method for processing and/or purification of the biological product according to the invention, i.e. alternative (III).

The term "difference between the baseline information and sample information" as used herein for alternative (iii) refers to any difference between the baseline information and sample information. The skilled person knows based on his or her common general knowledge how to define suitable baseline parameters in dependency of the used settings in the method for processing and/or purification of the biological product. The skilled person also knows based on his or her common general knowledge what a suitable difference from the baseline MALS signal is to determine the presence of the biological product. This typically depends on the purpose of the method for processing and/or purification of the biological product and on the employed experimental parameters. The sample information can be different from the baseline information by exceeding it. Thus, the baseline information serves as threshold information. The sample information can also be different from the baseline information based on the biological profile determined for the respective information, for example, by utilizing Multivariate Data Analysis (MVDA) and machine learning to process the information obtained from the MALS unit. Thus, the baseline information is used as reference information. The baseline information can in particular be obtained by applying baseline correction methods such as advanced baseline correction, wavelet transform analysis, chemometric methods such as Multivariate Curve Resolution (MCR) and Independent Component Analysis (ICA), time series analysis (for example ARIMA), machine learning algorithms, Random Forests, and methods to enhance the signal-to-noise ratio, such as smoothing or Fourier Transformation.

In one embodiment of alternative (iii), the computer program product comprises program instructions which cause a processor to perform and/or control at least steps iii.1), iii.2) and iii.3) when the computer program product runs on the processor. A processor is to be understood, for example, as control unit, microprocessor, microcontrol unit such as a microcontroller, digital signal processor (DSP), application-specific integrated circuit (ASIC) or field programmable gate array (FPGA). In this case, at least steps iii.1), iii.2) and iii.3) can be controlled or at least steps iii.1), iii.2) and iii.3) can be performed.

In one embodiment of alternative (iii), the computer program is distributable. The distribution of the computer program can take place, for example, via a network such as the Internet, a telephone or mobile radio network and/or a local area network. The computer program can be at least partially software and/or firmware of a processor. The computer program product can be at least partially implemented as hardware.

In one embodiment of alternative (iii), the computer program is stored on a storage medium. Such a storage medium can be a computer-readable storage medium such as a magnetic, electrical, optical storage medium and/or any other type of computer-readable storage medium. The storage medium can also be, for example, be part of the processor such as a (non-volatile or volatile) program memory of the processor or a part thereof. The storage medium can also be a tangible or physical storage medium.

Apparatus comprising means for carrying out the following steps:
iii.1) obtaining from a MALS unit baseline information and sample information,
   wherein the baseline information and sample information are determined from a stream of interest used by a processing and/or purification system in a method for processing and/or purification of the biological product, wherein the baseline information represents the stream of interest before the presence of the biological product,
   and wherein the sample information represents the stream of interest after the presence of the biological product;
iii.2) determining whether a difference exists between the stream of interest represented by the baseline information and the stream of interest represented by the sample information; and
iii.3) if it is determined that the difference exists, transmitting a command to a modification unit wherein the command causes the modification unit to modify the method for processing and/or purification of the biological product.

### EXAMPLES

### Example 1

The feed material was produced in a fed batch cell culture of Human Embryonic Kidney 293T cells, which were transiently transfected to produce a lentivirus. Supernatant containing lentivirus was harvested using a Sartopure PP3 (3 µm) filter and further clarified by a Sartoguard PES 1.2 / 0.2 µm filter.

Anion exchange chromatography was performed on an ÄKTA avant chromatography system (Cytiva, USA) equipped with a 4 ml bed volume column with a strong anion exchange quaternary ammonium (QA) stationary phase. The QA column was equilibrated with 10 column volume (CV) of 50 mM HEPES 250 mM NaCl pH 7.2. Afterwards 5 CV of feed material containing lentivirus were loaded on the column following a first (5 CV equilibration buffer) and a second washing step (5 CV 50 mM HEPES, 350 mM NaCl pH 7.2). The elution step was carried out using 3 CV of 50 mM HEPES, 1 M NaCl pH 7.2.

The flowthrough of the WA column was monitored by UV absorption at 280 nm and a Wyatt Dawn 8 MALS detector. Resulting signals were analyzed by Unicorn (Cytiva, USA) and Astra software (Wyatt, USA).

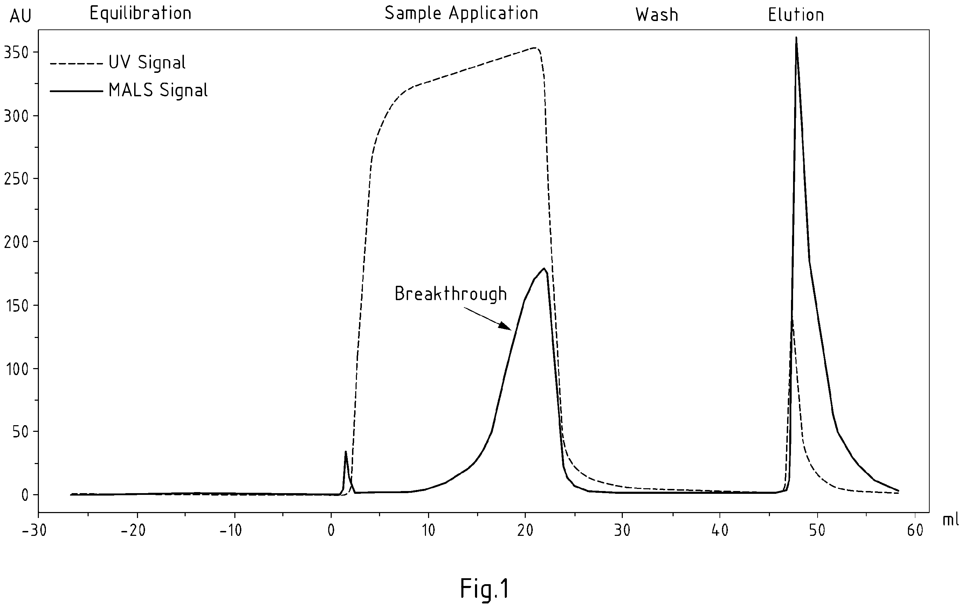

The monitoring of the flowthrough showed that MALS efficiently detects the breakthrough of viral particles from the anion exchange chromatography column (Figure 1). The detection of this breakthrough is not limited to the example of anion exchange chromatography but can be employed for other chromatography modes. The breakthrough signal can be used to trigger various chromatographic process steps like the dynamic loading in SMB chromatography, where the SMB system automatically switches to another equilibrated chromatography column once a threshold of the breakthrough signal is exceeded. Additionally, the breakthrough signal can be employed in batch chromatography processes, where the breakthrough signal triggers a stop of the feed loading phase and initiates a subsequent chromatographic step such as a washing step. The dynamic binding capacity (DBC) of a chromatography consumable can also be ascertained using the breakthrough signal, for instance, when 10% of the initial feed product concentration breaks through (10% DBC)

### Example 2

In an example of the present invention, a MALS system is integrated into a pharmaceutical chromatography process to detect bioburden levels in real-time.

A chromatography system is equipped with a MALS detector positioned downstream of the chromatography column. The MALS detector is configured to measure light scattering at multiple angles as the eluent exits the column. The system is calibrated using a series of known bioburden standards to establish a fingerprint scattering profile for various levels of microbial contamination.

During the operation of the chromatography process, the MALS detector continuously monitors the eluent. The light scattering data is collected at 15-degree intervals, ranging from 15 to 150 degrees relative to the incident light beam. This data is then directly analyzed by an algorithm designed to differentiate between scattering patterns characteristic of microbial cells and those of the target pharmaceutical compounds.

Upon processing a batch suspected of containing a bioburden, the MALS detector identifies an abnormal scattering pattern consistent with the presence of bacterial cells. The system alerts the operators and automatically diverts the flow to a waste container, preventing the contaminated product from proceeding to the next stage of the production process. Another reaction is the initiation of a dedicated cleaning-in-place step to clean the column from bioburden so that the column can be used for a new purification process.

The integration of the MALS system into the pharmaceutical production process allows for the real-time detection of bioburden, thereby enhancing product safety and reducing the risk of contamination.

### Example 3

In an example of the present invention a MALS system is integrated into tangential-flow filtration (TFF) device to ensure the integrity of the TFF membrane for the purification of an adenovirus as biopharmaceutical product.

For the generation of the adenovirus a 2L Univessel^{®} Glass cultivation vessel is inoculated with a viable Human Embryonic Kidney 293T cell concentration of 0.2E+6 cells/mL and at 2E+6 cells/mL a perfusion is executed with 1 VVD using an ATF as cell retention device. For the entire cultivation a pH of 7.25, DO > 55 % and a temperature of 37 °C is maintained by a BIOSTAT^{®} B-DCU unit. At 8E+6 cells/mL infection with the adenovirus is executed and prior to harvest the cultivation exhibit a viable cell concentration of approximately 8E+6 cells/mL with a viability of approximately 85 %. For cell lysis 10x lysis buffer (10 v/v polysorbate 20, 50 w/v sucrose, 20 mM MgCl₂, 500 mM Tris, 600 units/mL Denarase, pH 8.0) is added to the cultivation broth and incubate for 2 h at 37 °C. For the subsequent clarification a Sartoclear^{®} SartoScale Disposable DL60 depth filter in combination with a Sartopore^{®} SartoScale Disposable 2 XLG sterile filter is used.

An ambr CF crossflow device with a ambrCF 300 kDa (ensure the retention of the adenovirus in the retentate) Hydrosart membrane (10 cm²) is used for the subsequent ultra/diafiltration to increase the concentration of the adenovirus in the solution 5-fold and subsequently perform a 6-fold buffer exchange (transmembrane pressure is 800 mbar, feed flow rate = 20 mL/min) with a suitable diafiltration buffer (0.1 v/v polysorbate 20, 5 w/v sucrose, 1 mM MgCl₂, 50 mM bis-tris, 100 mM NaCl, pH 6.5). Throughout the entire TFF process a MALS system is at-line connected to the permeate stream measuring a baseline signal, indicating the absence of adenovirus and integrity of the TFF membrane. In the case of a membrane rapture or a defective membrane adenovirus enters the permeate stream and is detected there by the MALS as a sample signal. This triggers by a suitable computer program an alert to the operator and the raptured membrane is switched manually or automatically to a new integer one, which ensures that product loss is minimized.

### BRIEF DESCRIPTION OF THE DRAWINGS

The invention will hereinafter be described with reference to the Figures, which depict certain embodiments of the invention. The invention, however, is as defined in the claims and generally described herein.
Figure 1 shows the chromatogram from Example 1 wherein the flowthrough of the anion exchange chromatography column was analyzed by MALS and UV light absorption. Figure 1 shows that MALS detects efficiently and specifically the breakthrough of viral particles from the anion exchange chromatography column.
Figure 2A shows a flow chart of the method of the invention according to alternative (I).
Figure 2B shows a flow chart of an exemplary embodiment of the method of the invention according to alternative (I).
Figure 2C shows a flow chart of the computer program product of the invention according to alternative (i).
Figure 2D shows a flow chart of an exemplary embodiment of the computer program product of the invention according to alternative (i).
Figure 3 shows an embodiment of the method of the invention according to alternative (I)
wherein the chromatography separation method is an SMB chromatography separation method.
Figure 4A shows a flow chart of the method of the invention according to alternative (II).
Figure 4B shows a flow chart of an exemplary embodiment of the method of the invention according to alternative (II).
Figure 4C shows a flow chart of the computer program product of the invention according to alternative (ii).
Figure 4D shows a flow chart of an exemplary embodiment of the computer program product of the invention according to alternative (ii).
Figure 5A shows a flow chart of the method of the invention according to alternative (III).
Figure 5B shows a flow chart of an exemplary embodiment of the method of the invention according to alternative (III).
Figure 5C shows a flow chart of the computer program product of the invention according to alternative (iii).
Figure 5D shows a flow chart of an exemplary embodiment of the computer program product of the invention according to alternative (iii).
Figure 6 shows exemplary embodiments of storage media.
Figure 7 shows a block diagram illustrating an exemplary embodiment of an apparatus according to alternative (i), (ii) and (iii).

### DETAILED DESCRIPTION OF THE DRAWINGS

Figure 1 shows the chromatogram from Example 1. In Example 1 the flowthrough of the anion exchange chromatography column was analyzed by MALS and UV light absorption to detect the breakthrough of the biological product from an anion exchange chromatography column. Viral particles were the detected biological product. Figure 1 shows that MALS measurement is efficient and specific to detect the breakthrough of viral particles from the anion exchange chromatography column. In contrast, the measurement of UV absorption does not specifically detect the breakthrough of the biological product. Instead, UV absorption in the flowthrough is, for example, also caused by impurities of the processing material such as host cell fragments and components.

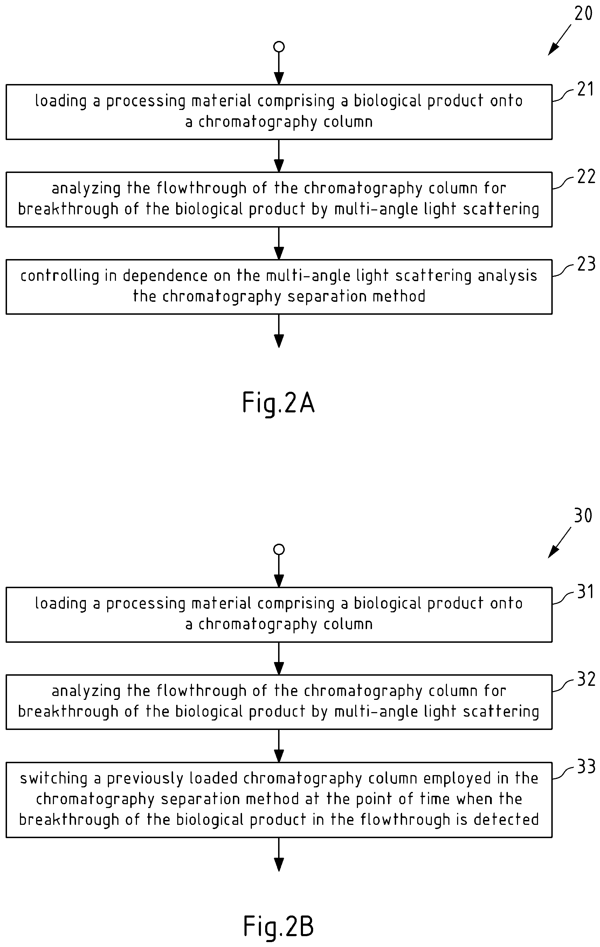

Figure 2A shows a flow chart 20 of the method of the invention according to alternative (I). After performing action 21, the flowthrough of the chromatography column is analyzed by MALS for breakthrough of the biological product (action 22). In action 23, the chromatography separation method is modified in dependence on the MALS analysis. For example, if the MALS analysis indicates the breakthrough of the biological product, the chromatography method is modified in at least one parameter to alter the chromatography separation method. The modification of the chromatography method can thus be initiated at the point of time when the MALS signal of the flowthrough is different from the baseline MALS signal representative for the flowthrough before the breakthrough of the biological product. The method of flow chart 20 can comprise further actions before action 21, after action 23 or in between actions 21, 22 and 23.
Figure 2B shows a flow chart 30 of an exemplary embodiment of the method of the invention according to alternative (I). After performing action 31, the flowthrough of the chromatography column is analyzed by MALS for breakthrough of the biological product (action 32). In action 33, a previously loaded chromatography column employed in the chromatography separation method is switched at the point of time when the breakthrough of the biological product in the flowthrough is detected. The method of flow chart 30 can comprise further actions before action 31, after action 33 or in between actions 31, 32 and 33.

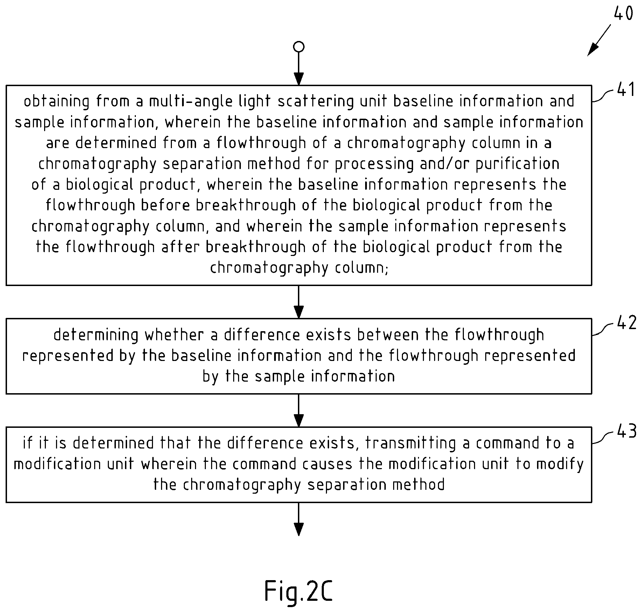

Figure 2C shows a flow chart 40 of the computer program product of the invention according to alternative (i). The computer program product of flow chart 40 can be used in the method of the invention according to alternative (I) as shown in flow chart 20. The computer program product can perform and/or control at least actions 41, 42 and 43. The computer program product of flow chart 40 can perform and/or control further actions before action 41, after action 43 or in between actions 41, 42 and 43. In action 41, the computer program product obtains data from a MALS unit. These data relate to baseline information and sample information derived from the flowthrough of a chromatography column. The sample information differs from the baseline information at least in that it potentially contains the biological product. The biological product is suitable for MALS detection. In action 42, the computer program product determines a difference between the baseline information and sample information. In action 43, the computer program product transmits a command to modification unit wherein the command causes the modification unit to modify the chromatography separation method in at least one parameter.

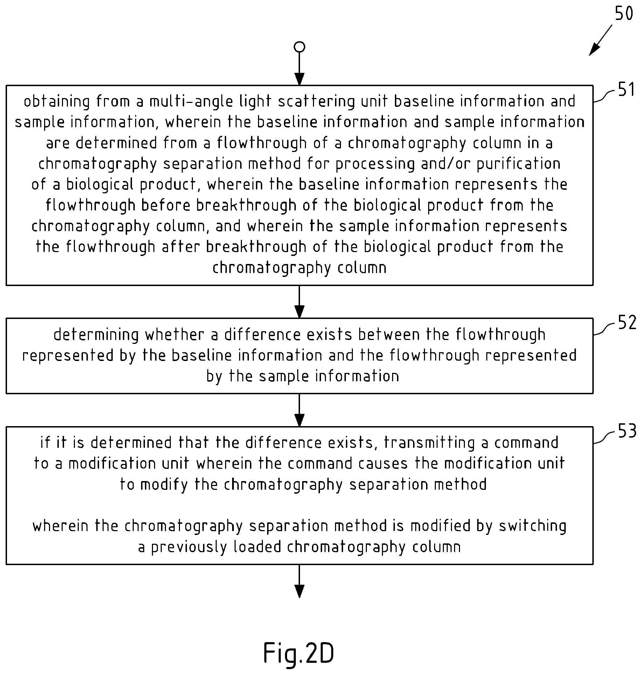

Figure 2D shows a flow chart 50 of an exemplary embodiment of the computer program product of the invention according to alternative (i). The computer program product of flow chart 50 can be used in the method of the invention according to alternative (I) as shown in flow chart 30. The computer program product can perform and/or control at least actions 51, 52 and 53. The computer program product of flow chart 50 can perform and/or control further actions before action 51, after action 53 or in between actions 51, 52 and 53. In action 53, the computer program product transmits a command to a modification unit wherein the command causes the modification unit to modify the chromatography separation method wherein the chromatography separation method is modified by switching a previously loaded chromatography column. For example, the computer program product of flow chart 50 can transmit a command to a modification unit wherein the command causes the modification unit to open and/or close valves in such a way that the processing material comprising the biological product is directed to another chromatography column.

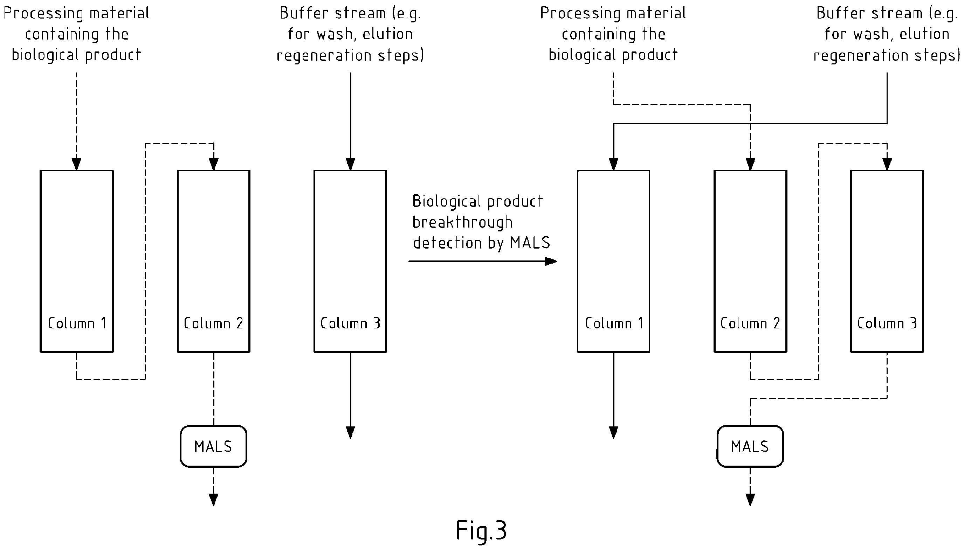

Figure 3 shows an exemplary embodiment of the chromatography separation method according to alternative (I). In this embodiment, the chromatography separation method is a SMB chromatography separation method. The processing material containing the biological product is provided to a first chromatography column. The flowthrough of the first chromatography column is loaded onto a downstream second chromatography column. The flowthrough of the second chromatography column is analyzed for breakthrough of the product. If the MALS analysis indicates a breakthrough of the biological product, the chromatography separation method is modified by loading the second chromatography column with the processing material containing the product instead of the first chromatography column and by now analyzing the flowthrough of a third chromatography column by MALS which is connected downstream to the second chromatography column.

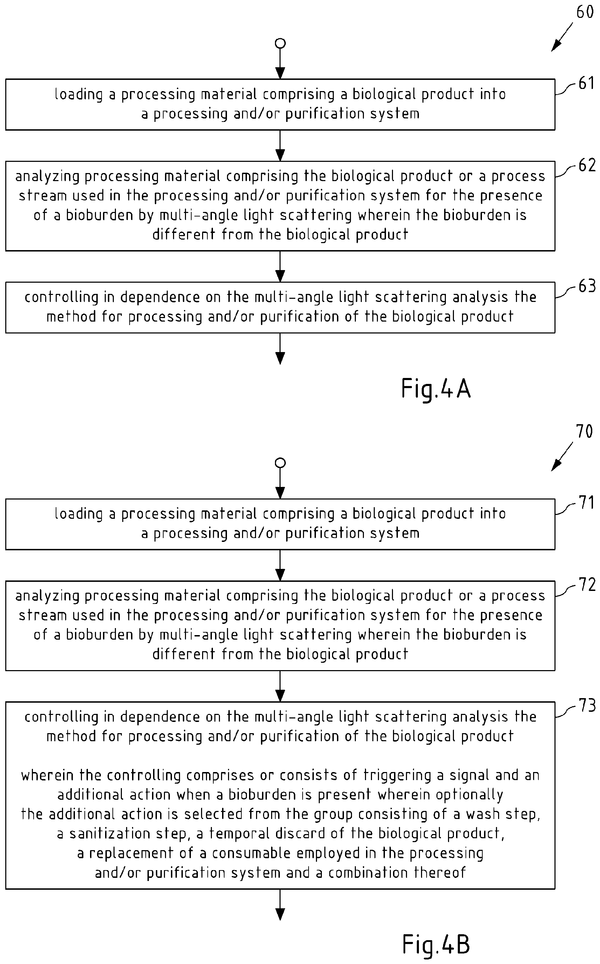

Figure 4A shows a flow chart 60 of the method of the invention according to alternative (II). After performing action 61, the processing material comprising the biological product or a process stream is analyzed for the presence of a bioburden by MALS (action 62). The bioburden is suitable for MALS detection. In action 63, the processing and/or purification method is modified in dependence on the MALS analysis. For example, if the MALS analysis shows the presence of a bioburden, the processing and/or purification method is modified in at least one parameter to obtain a biological product that fulfills the requirements of a safe biological product. The method of flow chart 60 can comprise further actions before action 61, after action 63 or in between actions 61, 62 and 63.
Figure 4B shows a flow chart 70 of an exemplary embodiment of the method of the invention according to alternative (II). After performing action 71, the processing material comprising the biological product or a process stream is analyzed for the presence of a bioburden by MALS (action 72). In action 73, the processing and/or purification method is controlled in dependence on the MALS analysis wherein the controlling comprises or consist of triggering a signal and an additional action when a bioburden is present and wherein optionally the additional action is selected from the group consisting of a wash step, a sanitization step, a temporal discard of the biological product, a replacement of a consumable employed in the processing and/or purification system and a combination thereof. The method of flow chart 70 can comprise further actions before action 71, after action 73 or in between actions 71, 72 and 73.

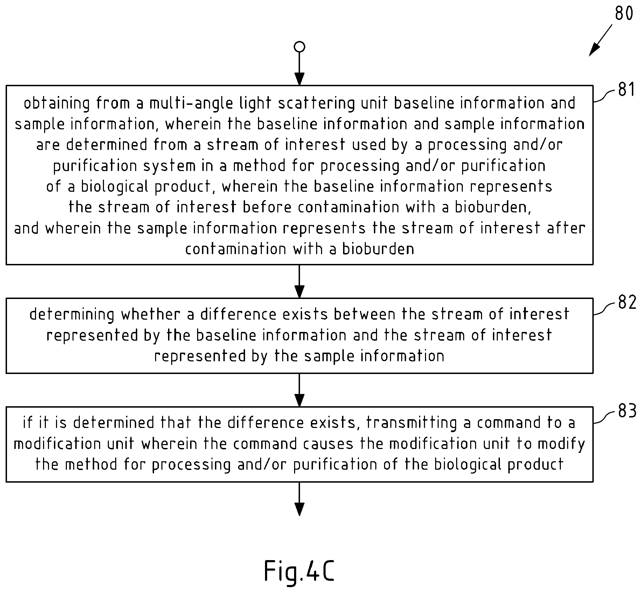

Figure 4C shows a flow chart 80 of the computer program product of the invention according to alternative (ii). The computer program product of flow chart 80 can be used in the method of the invention according to alternative (II) as shown in flow chart 60. The computer program product can perform and/or control at least actions 81, 82 and 83. The computer program product of flow chart 80 can perform and/or control further actions before action 81, after action 83 or in between actions 81, 82 and 83. In action 81, the computer program product obtains data from a MALS unit. These data relate to baseline information and sample information determined from a stream of interest used by a processing and/or purification system. The sample information differs from the baseline information at least in that it potentially contains a bioburden. The bioburden is suitable for MALS detection. In action 82, the computer program product determines a difference between the baseline information and the sample information. In action 83, the computer program biological product transmits a command to a modification unit wherein the command causes the modification unit to modify the processing and/or purification method of the biological product in at least one parameter to alter the processing and/or purification of the biological product.

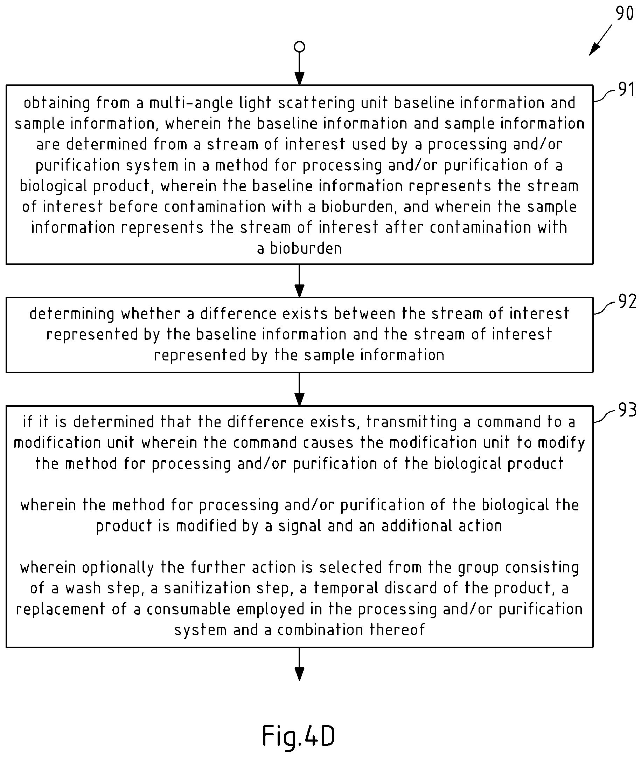

Figure 4D shows a flow chart 90 of an exemplary embodiment of the computer program product of the invention according to alternative (ii). The computer program product of flow chart 90 can be used in the method of the invention according to alternative (II) as shown in flow chart 70. The computer program product can perform and/or control at least actions 91, 92 and 93. The computer program product of flow chart 90 can perform and/or control further actions before action 91, after action 93 or in between actions 91, 92 and 93. In action 93, the computer program product transmits a command to a modification unit wherein the command causes the modification unit to modify the processing and/or purification method of the product wherein the processing and/or purification method of the product is modified by a signal and an additional action if a difference between the baseline information and the sample information is determined and wherein optionally the additional action is selected from the group consisting of a wash step, a sanitization step, a temporal discard of the biological product, a replacement of a consumable employed in the processing and/or purification system and a combination thereof.

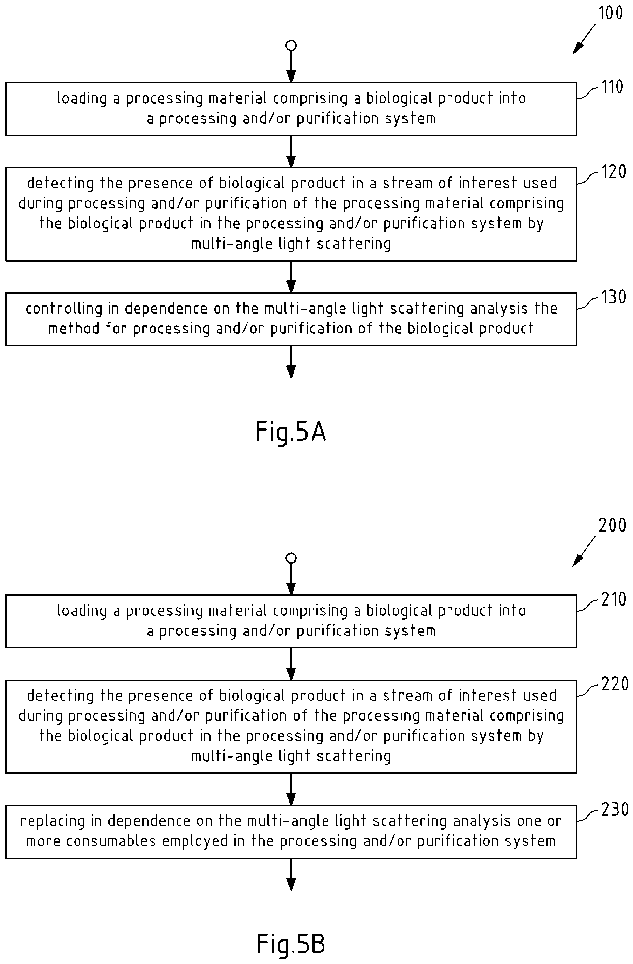

Figure 5A shows a flow chart 100 of the method of the invention according to alternative (III). After performing action 110, a stream of interest used during processing and/or purification of the processing material comprising the biological product in the processing and/or purification system is analyzed by MALS (action 120). This means that any stream of interest used by the processing and/or purification system from the processing material comprising the biological product can be analyzed for the presence of a biological product. The biological product is suitable for MALS detection. In action 130, the method for processing and/or purification of the product is modified in dependence on the MALS analysis. For example, if the MALS analysis indicates the presence of the biological product in a stream of interest, the chromatography method is modified in at least one parameter to alter the method for processing and/or purification of the product. The method of flow chart 100 can comprise further actions before action 110, after action 130 or in between actions 110, 120 and 130.
Figure 5B shows a flow chart 200 of an exemplary embodiment of the method of the invention according to alternative (III). The method of this exemplary embodiment can, for example, be a tangential flow filtration method. The stream of interest could then be a permeate. After performing action 210, a stream of interest used in the method for processing and/or purification of the biological product is analyzed for the presence of the biological product by MALS (action 220). If the method is a tangential flow filtration method, a permeate could be analyzed for the presence of the biological product. In action 230, one or more consumable are replaced in response to the MALS measurement. If the method is a tangential flow filtration method and a permeate was analyzed, the replaced consumable could be, for example, a membrane filter. The method of flow chart 200 can comprise further actions before action 210, after action 230 or in between actions 210, 220 and 230.

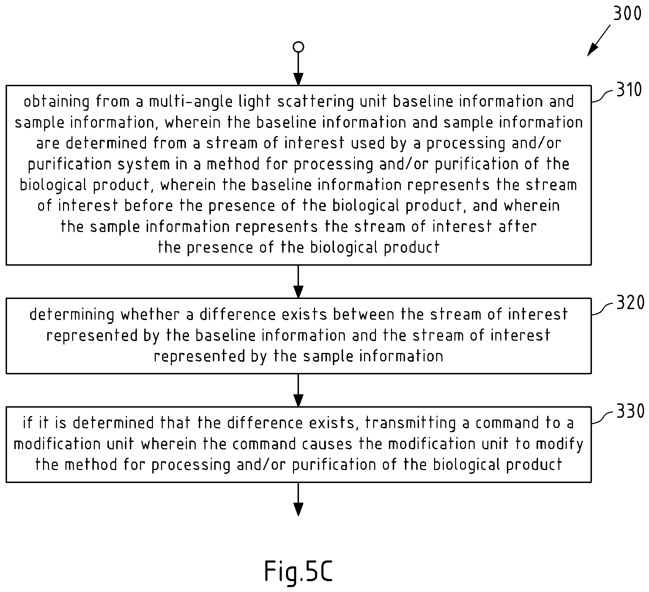

Figure 5C shows a flow chart 300 of the computer program product of the invention according to alternative (iii). The computer program product of flow chart 300 can be used in the method of the invention according to alternative (III) as shown in flow chart 100. The computer program product can perform and/or control at least actions 310, 320 and 330. The computer program product of flow chart 300 can perform and/or control further actions before action 310, after action 330 or in between actions 310, 320 and 330. In action 310, the computer program product receives data from a MALS unit. These data relate to baseline information and sample information determined from the stream of interest used by a processing and/or purification system. The sample information differs from the baseline information at least in that it potentially contains a biological product. The biological product is suitable for MALS detection. In action 320, the computer program product determines a difference between the baseline information and sample information. In action 330, the computer program product transmits a command to a modification unit wherein the command causes the modification unit to modify the processing and/or purification method of the biological product.

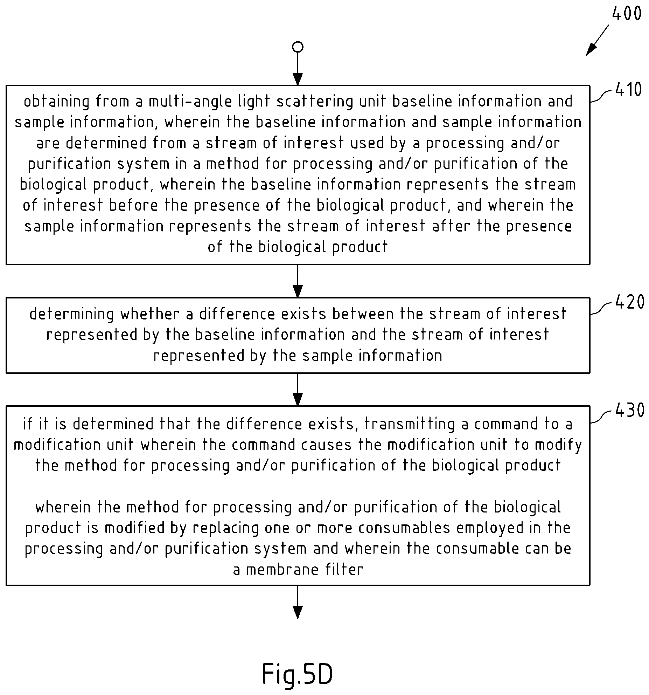

Figure 5D shows a flow chart 400 of an exemplary embodiment of the computer program product of the invention according to alternative (iii). The computer program product of flow chart 400 can be used in the method of the invention according to alternative (III) as shown in flow chart 200. The computer program product can perform and/or control at least actions 410, 420 and 430. The computer program product of flow chart 400 can perform and/or control further actions before action 410, after action 430 or in between actions 410, 420 and 430. In action 430, the computer program product transmits a command to a modification unit wherein the command causes the modification unit to modify the processing and/or purification method of the biological product by replacing one or more consumables employed in the processing and/or purification system wherein the replaced consumable can be a membrane filter.

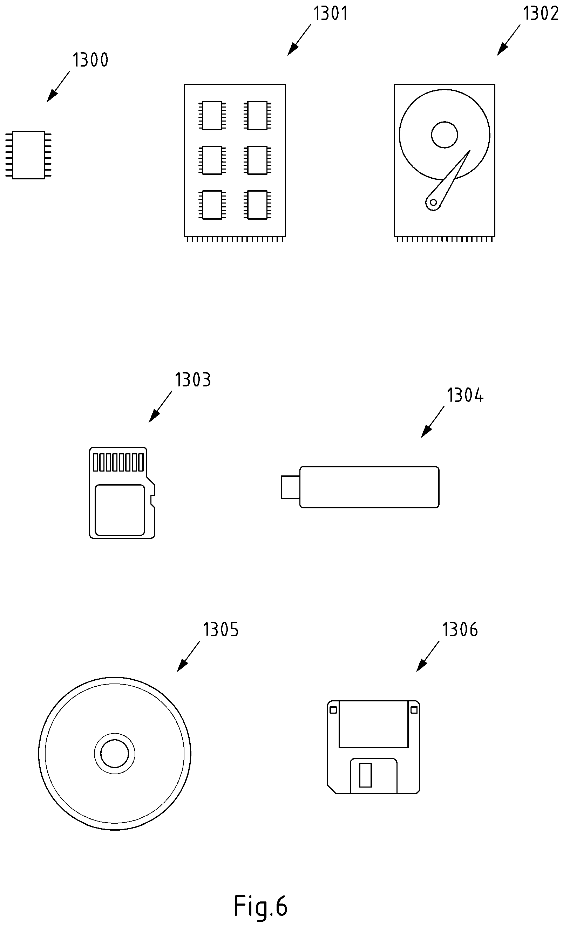

Figure 6 shows exemplary embodiments of storage media. The storage medium may, by way of example, be a magnetic, electrical, optical and/or other kind of storage medium. The storage medium may, by way of example, be part of a processor, for example a (non-volatile or volatile) program memory of the processor or a part thereof. Exemplary embodiments of a storage medium are a flash memory 1300, an SSD hard disc 1301, a magnetic hard disc 1302, a memory card 1303, a memory stick 1304 (for example a USB stick), a CD ROM or DVD 1305 of a floppy disc 1306.

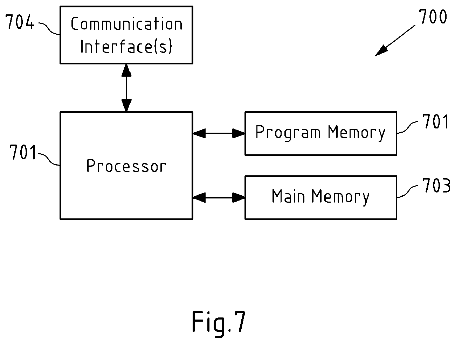

Figure 7 shows a block diagram illustrating an exemplary embodiment of apparatus 700. Apparatus 700 may be considered as stand-alone server (for example, which operates with a Linux-based operating system) or as medium or large rack configuration including multiple servers. In other examples, apparatus 700 may be implemented or deployed in a virtualized system or virtualized environment, for example in form of a virtualized, cloud-based or software as a service deployment. Apparatus 700 may comprise a processor 701 which may represent a single processor or two or more processors (which, for example, are at least partially coupled, for example, via a bus). Processor 701 may execute a program code stored in program memory (for example, program code causing apparatus 700 to perform embodiments according to the present disclosure or parts thereof) and interfaces with a main memory 703. Program memory may also comprise an operating system (for example, a Linux-based operating system) for processor 701. Some or all of memories may also be included into processor 701. Moreover, processor 701 may control one or more communication interface(s) 704 which may for example be configured to communicate with further apparatuses. For example, the one or more communication interface(s) 704 may be implemented as one or more wireless and/or wired communication interfaces. A wireless communication interface may for example be a WLAN-, GSM-, UMTS-, LTE and/or 5G-interface. A wired communication interface may for example be an Ethernet interface as for example further specified in the standards of the IEEE-802.3 family. The components 702 to 704 of apparatus 700 may for example be connected with processor 701 by means of one or more serial and/or parallel busses. It is to be understood that apparatus 700 may comprise various other components (for example, a display for displaying information to a user and/or an input device such as, for example, a keyboard, a keypad, a touchpad or a mouse for obtaining information from the user).

## Claims

1. Method for processing and/or purification of a biological product (20, 60, 100) involving multi-angle light scattering (MALS) as analytical tool for process control wherein
(I) the method is a chromatography separation method and comprises at least the following steps:
a.I) loading a processing material comprising a biological product onto a chromatography column (21);
b.I) analyzing the flowthrough of the chromatography column for breakthrough of the biological product by MALS (22); and
c.I) controlling in dependence on the analysis of step b.I) the chromatography separation method (23); or
(II) the method comprises at least the following steps:
a.II) loading a processing material comprising a biological product into a processing and/or purification system (61); and
b.II) analyzing the processing material comprising the biological product or a process stream used in the processing and/or purification system for the presence of a bioburden by MALS wherein the bioburden is different from the biological product (62);
c.II) controlling in dependence on the analysis of step b.II) the method for processing and/or purification of the biological product (63); or
(III) the method comprises at least the following steps:
a.III) loading a processing material comprising a biological product into a processing and/or purification system (110);
b.III) detecting the presence of the biological product in a stream of interest used during the processing and/or purification of the processing material comprising the biological product in the processing and/or purification system by MALS (120); and
c.III) controlling in dependence on the detection of step b.III) the method for processing and/or purification of the biological product (130).

2. Method according to claim 1, alternative (I), (II) or (III), wherein the MALS measurement involves the measurement of scattered light from at least 2, preferably from at least 3, more preferably from at least 5, even more preferably from at least 7, still more preferably from at least 10 and most preferably from at least 15 discrete angles.

3. Method according to claim 1 or 2, alternative (I), (II) or (III), wherein the information acquired by the MALS measurement is further processed by a mathematical algorithm, preferably to enhance detection of a biological product attribute or bioburden attribute.

4. Method according to any one of the preceding claims, alternative (I), (II) or (III), wherein the MALS measurement is performed on-line, in-line or at-line, preferably on-line or at-line.

5. Method according to any one of the preceding claims, wherein the biological product of alternative (I) or (III) is a biological particle.

6. Method according to any one of the preceding claims, alternative (I), wherein the controlling of step c.I) comprises or consists of switching a previously loaded chromatography column employed in the chromatography separation method at the point of time when the breakthrough of the biological product in the flowthrough is detected in step b.I) (33).

7. Method according to any one of the preceding claims, alternative (I), wherein the chromatography separation method is a continuous chromatography method.

8. Method according to any one of the preceding claims, alternative (I), wherein the controlling of step c.I) includes the calculation of the dynamic binding capacity of the chromatography column.

9. Method according to any of claims 1-4, alternative (II), wherein the controlling of step c.II) comprises or consists of triggering a signal and an additional action when a bioburden is present.

10. Method according to any of claims 9, wherein the additional action is selected from the group consisting of a wash step, a sanitization step, a temporal discard of the biological product, a replacement of a consumable employed in the processing and/or purification system and a combination thereof (73).

11. Method according to any one of claims 1-5, alternative (III), wherein the controlling of step c.III) comprises or consists of replacing in dependence on the detection of step b.III) one or more consumables employed in the processing and/or purification system.

12. Method according to any one of claims 1-5, alternative (III), or 11 wherein the method is a tangential flow filtration method, the stream of interest is a permeate and the consumable is a membrane used as filter for obtaining the permeate.

13. System for processing and/or purification of a biological product from a processing material comprising at least one multi-angle light scattering (MALS) unit wherein
A. the system for processing and/or purification of the biological product from the processing material comprises:
A.1) at least one chromatography column;
A.2) at least one MALS unit comprising means configured to perform the method of any one of claims 1-8, alternative (I); or
B. the system for processing and/or purification of the biological product from the processing material comprises:
B.1) one or more processing and/or purification units; and
B.2) at least one MALS unit comprising means configured to perform the method of any one of claims 1-4, 9-10, alternative (II); or
C. the system for processing and/or purification of the biological product from the processing material comprises:
C.1) one or more processing and/or purification units; and
C.2) at least one MALS unit comprising means configured to perform the method of any one of claims 1-5, 11, alternative (III).

14. A computer program product (40, 80, 300) comprising instructions which, when the program is executed by a computer, cause the computer to carry out
i. at least the following steps:
i.1) obtaining from a multi-angle light scattering (MALS) unit baseline information and sample information,
wherein the baseline information and sample information are determined from a flowthrough of a chromatography column in a chromatography separation method for processing and/or purification of a biological product,
wherein the baseline information represents the flowthrough before breakthrough of the biological product from the chromatography column, and wherein the sample information represents the flowthrough after breakthrough of the biological product from the chromatography column (41, 51);
i.2) determining whether a difference exists between the flowthrough represented by the baseline information and the flowthrough represented by the sample information (42, 52); and
i.3) if it is determined that the difference exists, transmitting a command to a modification unit wherein the command causes the modification unit to modify the chromatography separation method (43); or
ii. at least the following steps:
ii.1) obtaining from a multi-angle light scattering (MALS) unit baseline information and sample information,
wherein the baseline information and sample information are determined from a stream of interest used by a processing and/or purification system in a method for processing and/or purification of a biological product, wherein the baseline information represents the stream of interest before contamination with a bioburden,
and wherein the sample information represents the stream of interest after contamination with a bioburden (81, 91);
ii.2) determining whether a difference exists between the stream of interest represented by the baseline information and the stream of interest represented by the sample information (82, 92); and
ii.3) if it is determined that the difference exists, transmitting a command to a modification unit wherein the command causes the modification unit to modify the method for processing and/or purification of the biological product (83); or
iii. at least the following steps:
iii.1) obtaining from a multi-angle light scattering (MALS) unit baseline information and sample information,
wherein the baseline information and sample information are determined from a stream of interest used by a processing and/or purification system in a method for processing and/or purification of a biological product, wherein the baseline information represents the stream of interest before the presence of the biological product,
and wherein the sample information represents the stream of interest after the presence of the biological product (310, 410);
iii.2) determining whether a difference exists between the stream of interest represented by the baseline information and the stream of interest represented by the sample information (320, 420); and
iii.3) if it is determined that the difference exists, transmitting a command to a modification unit wherein the command causes the modification unit to modify the method for processing and/or purification of the biological product (330).

15. A computer program product
according to claim 13, alternative i,
wherein in step i.3) the chromatography separation method is modified by switching a previously loaded chromatography column (53), or
according to claim 13, alternative ii,
wherein in step ii.3) the processing and/or purification method is modified by a signal and an additional action, wherein optionally the further action is selected from the group consisting of a wash step, a sanitization step, a temporal discard of the biological product, a replacement of a consumable employed in the processing and/or purification system and a combination thereof (93),
or according to claim 13, alternative iii,
wherein in step iii.3) the processing and/or purification method is modified by replacing one or more consumables employed in the processing and/or purification system (430).
